(19) **Europäisches Patentamt** / **European Patent Office** / **Office européen des brevets**

(11) **EP 2 510 701 B1**

(12) # FASCICULE DE BREVET EUROPEEN

(45) Date de publication et mention de la délivrance du brevet:
**17.02.2016 Bulletin 2016/07**

(21) Numéro de dépôt: **10787790.4**

(22) Date de dépôt: **10.12.2010**

(51) Int Cl.:
**H04N 19/67** *(2014.01)*  **H04N 21/2343** *(2011.01)*
**H04N 21/2385** *(2011.01)*  **H04N 21/24** *(2011.01)*
**H04N 21/258** *(2011.01)*  **H04N 21/2662** *(2011.01)*
**H04N 19/154** *(2014.01)*  **H04N 19/196** *(2014.01)*
**H04N 19/146** *(2014.01)*  **H04N 19/166** *(2014.01)*
**H04N 19/37** *(2014.01)*  **H04N 19/50** *(2014.01)*
**H04N 19/172** *(2014.01)*  **H04N 19/61** *(2014.01)*
**H04N 19/136** *(2014.01)*  **H04N 19/124** *(2014.01)*
**H04N 19/177** *(2014.01)*  **H04N 19/29** *(2014.01)*
**H04N 19/89** *(2014.01)*  **H04N 19/895** *(2014.01)*

(86) Numéro de dépôt international:
**PCT/EP2010/069384**

(87) Numéro de publication internationale:
**WO 2011/070157 (16.06.2011 Gazette 2011/24)**

(54) **PROCEDE ET SYSTEME POUR LA DETERMINATION DE PARAMETRES DE CODAGE SUR DES FLUX A RESOLUTION VARIABLE**

VERFAHREN UND VORRICHTUNG FÜR DIE BESTIMMUNG DER KODIERUNGSPARAMETER VON BITSTRÖMEN MIT VARIABLER AUFLÖSUNG

METHOD AND APPARATUS FOR DETERMINING CODING PARAMETERS OF BITSTREAMS OF VARIABLE RESOLUTION

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **11.12.2009 FR 0906007**

(43) Date de publication de la demande:
**17.10.2012 Bulletin 2012/42**

(73) Titulaire: **THALES**
**92400 Courbevoie (FR)**

(72) Inventeurs:
- **LAMY-BERGOT, Catherine**
  **F-92700 Colombes (FR)**
- **GADAT, Benjamin**
  **F-92700 Colombes (FR)**
- **MARCILLE, Sébastien**
  **F-92700 Colombes (FR)**
- **RENAN, Erwann**
  **F-92700 Colombes (FR)**

(74) Mandataire: **Lucas, Laurent Jacques et al**
**Marks & Clerk France**
**Conseils en Propriété Industrielle**
**Immeuble Visium**
**22, Avenue Aristide Briand**
**94117 Arcueil Cedex (FR)**

(56) Documents cités:
**EP-A1- 2 051 525       US-A1- 2003 135 863**
**US-A1- 2005 175 084**

- **HAN L; RAYCHAUDHURI D; LIU H; RAMASWAMY K: "Cross layer optimization for scalable video multicast over 802.11 WLANs", 2007 4TH IEEE CONSUMER COMMUNICATIONS AND NETWORKING CONFERENCE (IEEE CAT NO. 07EX1539), 11 janvier 2007 (2007-01-11), - 13 janvier 2007 (2007-01-13), pages 838-843, XP002592829, LasVegas, NV, USA ISBN: 1-4244-0666-8**

- BERGERON C., LAMY-BERGOT C.: "Modelling H.264/AVC sensivitity for error protection in wireless transmissions", 2006 IEEE 8TH WORKSHOP ON MULTIMEDIA SIGNAL PROCESSING, MMSP'06, 3 octobre 2006 (2006-10-03), - 6 octobre 2006 (2006-10-06), pages 302-305, XP002592830, Victoria, Canada ISBN: 0-7803-9751-7 cité dans la demande

- BOVIK A C ET AL: "Image Quality Assessment: From Error Visibility to Structural Similarity", IEEE TRANSACTIONS ON IMAGE PROCESSING, IEEE SERVICE CENTER, PISCATAWAY, NJ, US LNKD- DOI:10.1109/TIP.2003.819861, vol. 13, no. 4, 1 avril 2004 (2004-04-01), pages 600-612, XP011110418, ISSN: 1057-7149

**Description**

La présente invention concerne la problématique de l'optimisation du bilan de liaison d'une communication multimédia. Elle propose un procédé de contrôle permettant notamment de déterminer efficacement la meilleure allocation du débit disponible entre d'une part la compression des données vidéo et d'autre part la protection de ces données, par exemple par insertion de codes correcteurs. L'allocation est effectuée dans le but de fournir la meilleure qualité perçue pour un ou plusieurs utilisateurs en fonction des conditions de transmission ou pour fournir une qualité donnée à débit utilisé minimal.

L'invention s'applique en particulier à une séquence vidéo compressée par un codeur source ayant la faculté de produire plusieurs sous ensembles imbriqués qui correspondent chacun à une résolution, temporelle ou spatiale différente de la résolution de la séquence initiale. On parle alors de granularité ou en anglais « scalability ». Chaque résolution peut être transmise et/ou décodée indépendamment et par des utilisateurs différents. L'intérêt de cette méthode réside dans l'adaptation des paramètres de compression aux conditions de transmission des différents utilisateurs. A cet effet l'invention s'applique également au domaine de la diffusion de signaux vidéo à travers des canaux de transmission non parfaits, c'est-à-dire soumis à des erreurs de transmission et/ou à un débit disponible variable et contraint.

L'invention a notamment pour objectif de proposer un procédé dynamique et adaptatif de contrôle des paramètres de compression pour un flux vidéo compressé présentant plusieurs niveaux de granularité spatiale ou temporelle qui correspondent à des résolutions différentes. Un tel procédé permet d'adapter en débit le flux vidéo à transmettre vers plusieurs utilisateurs ou vers un utilisateur unique par le biais d'un canal de transmission qui connait des variations de débit disponible importantes au cours du temps. Un autre objectif de l'invention est d'effectuer une allocation optimisée du débit entre d'une part la compression et d'autre part la protection. Le critère retenu, dans tous les cas, pour réaliser l'optimisation selon l'invention est la qualité perçue par le ou les utilisateurs.

Dans le cas d'une communication multimédia sur un lien présentant un débit contraint et soumis à des erreurs de propagation, l'optimisation par rapport à un point de fonctionnement nominal du système est largement sous-optimale car elle ne prend pas en compte les variations des conditions du canal de transmission ni le contenu du flux multimédia à transmettre.

Les procédés et les dispositifs selon l'art antérieur ne permettent pas de s'adapter rapidement aux variations des conditions de transmission notamment dans le cas d'une transmission sans fil. Les paramètres de codage sont déterminés en général pour un point de fonctionnement donné, correspondant typiquement à un débit moyen autorisé/disponible pour un taux de pertes ou d'erreurs résiduelles subies par le flux transmis. Lorsque les conditions de transmission sont meilleures que le point de fonctionnement retenu, une partie du débit disponible est allouée inutilement à la protection du flux transmis, alors qu'elle pourrait, soit être épargnée, soit être utilisée pour émettre à un débit utile plus important. Inversement, lorsque les conditions de transmission sont moins bonnes que le point de fonctionnement retenu, une trop grande partie du débit est employée par la donnée utile non protégée, ce qui conduit à des pertes inévitables en réception, c'est-à-dire qu'une partie des données ne peut être protégée car l'allocation de débit pour la protection se révèle en pratique insuffisante.

Une autre solution connue qui vise le problème de la variation des conditions de transmission concerne les méthodes de modulation et codage adaptifs, plus connues sous le terme anglo-saxon « Adaptive coding and modulation » (ACM). Ces méthodes sont basées sur une adaptation des schémas de modulation et de codage canal en fonction des conditions de transmission. Un de leurs inconvénients est qu'elles ne permettent pas de prendre en compte et de modifier le contenu du flux à transmettre pour l'adapter aux contraintes du canal. L'adaptation dans ce cas a pour effet essentiel de modifier le rythme de transmission des données ce qui peut engendrer des problèmes de délai et de gigue notamment lorsque la transmission se fait à débit constant.

Les solutions de l'art antérieur ne prennent pas non plus en compte la particularité du flux vidéo à transmettre qui peut être représenté à plusieurs niveaux de résolution. Un tel flux compressé offrant de la granularité temporelle ou spatiale peut être exploité afin d'adapter la source aux besoins de chaque utilisateur dans le cas d'une transmission à travers un réseau hétérogène.

On connait par ailleurs le document US 2005/175084 A1 qui concerne une méthode de transmission de flux vidéo scalables à travers un réseau à destination de plusieurs récepteurs présentant des contraintes différentes.

Afin de pallier les limitations des solutions de l'art antérieur, l'invention propose un procédé permettant de déterminer, de façon optimale, des paramètres de compression incluant le débit source, le taux de protection ainsi que le niveau de résolution d'une séquence vidéo compressée transmise à travers un réseau hétérogène et à destination de plusieurs utilisateurs. La détermination des paramètres se fait, notamment, en fonction des besoins des utilisateurs et des contraintes, connues a priori, des canaux de transmission. Le procédé proposé est mis en oeuvre, par exemple, par l'intermédiaire d'un dispositif appelé contrôleur conjoint qui a pour objet la détermination ainsi que la supervision desdits paramètres de compression.

Le procédé selon l'invention permet également, pour un utilisateur donné recevant un flux compressé offrant une granularité temporelle ou spatiale, d'aider à la décision dans le choix du sous ensemble à décoder en fonction de la qualité finale perçue. De plus, l'invention reste compatible notamment des solutions de l'art antérieur de type ACM pour lesquelles elle intervient en complément de la protection fournie par ce type de solution. Une méthode ACM ayant pour effet de rendre variable le débit du canal de transmission, le procédé selon l'invention adapte, dans ce cas, le débit utile du flux transmis en fonction du débit variable du canal.

L'invention a notamment pour avantage de fournir des outils permettant la comparaison objective de la qualité perçue pour chaque résolution transmise au sein du flux compressé et ainsi de permettre une aide à la décision des choix de paramètres de compression associés à chaque résolution.

A cet effet, l'invention a pour objet un procédé de détermination des paramètres de codage d'un flux vidéo à résolution variable par un codeur vidéo tel que revendiqué à la revendication 1.

Dans une variante de réalisation de l'invention, ledit flux vidéo compressé est composé au moins de trames I et de trames P et que la qualité perçue est déterminée à partir de la relation suivante :

$$\hat{D}_{gop} = \prod_{i=0}^{N} \prod_{k=1}^{C} (1-P_e)^{\beta_{i,k} \cdot n_{i,k}} . D_0 +$$

$$\sum_{i=0}^{N} \sum_{k=1}^{C} [\prod_{j=0}^{N} \prod_{l=1}^{k-1} (1-P_e)^{\beta_{j,l} \cdot n_{j,l}} \prod_{j=0}^{i-1} (1-P_e)^{\beta_{j,k} \cdot n_{j,k}} (1-(1-P_e)^{\beta_{i,k} \cdot n_{i,k}}) D_{loss_{i,k}}] ,$$

où N est le nombre d'images dans un groupe d'images (GOP), C est le nombre de couches de résolution, $n_{i,k}$ est la taille de la $k^{ieme}$ couche de résolution de la $i^{ème}$ trame P, $D_{loss\ i,k}$ est la distorsion observée lorsque la $k^{ieme}$ couche de résolution de la $i^{ème}$ trame P est perdue alors que les trames précédentes sont correctes, $D_0$ est la distorsion moyenne d'un groupe d'images sans erreur, $\beta_{i,k}$ est un paramètre prédéfini, $P_e$ est la probabilité d'erreur sur le lien de transmission.

Dans une variante de réalisation de l'invention, la distorsion $D_0$ est égale au rapport signal à bruit PSNR.

Dans une variante de réalisation de l'invention, la distorsion $D_0$ est déterminée comme la différence entre ledit flux vidéo compressé à une résolution donnée et ledit flux vidéo non compressé à la résolution maximale parmi celles disponibles.

Dans une variante de réalisation de l'invention, lesdits groupes homogènes sont déterminés de façon à ce qu'une différence de qualité minimum donnée existe entre chaque groupe.

Dans une variante de réalisation de l'invention, le procédé selon l'invention comprend en plus une étape de vérification des choix de paramètres de compression qui consiste au moins à déterminer la métrique de qualité perçue du flux vidéo et vérifier que cette métrique est supérieure à $D_{min}$ et inférieure à $D_{max}$

Dans une variante de réalisation de l'invention, le procédé selon l'invention comprend en plus une étape d'ajout de protection supplémentaire à l'aide d'un mécanisme de codage correcteur autorisant la redondance incrémentale.

Dans une variante de réalisation de l'invention, ledit flux vidéo présente une résolution variable spatiale et/ou temporelle et/ou en qualité.

L'invention a également pour objet un système pour déterminer des paramètres de codage d'un flux vidéo à résolution variable caractérisé en ce qu'il comporte au moins un codeur vidéo et un dispositif de contrôle conjoint adapté à piloter ledit codeur vidéo en exécutant au moins les étapes du procédé selon l'invention.

D'autres caractéristiques apparaîtront à la lecture de la description détaillée donnée à titre d'exemple et non limitative qui suit faite en regard de dessins annexés qui représentent :

La figure 1, une illustration du principe de granularité temporelle et spatiale d'un flux vidéo compressé,

La figure 2, un exemple de calcul d'une métrique d'estimation de la qualité utilisée par le procédé selon l'invention,

La figure 3, l'illustration de l'impact en terme de variation de la qualité vidéo de la perte de trames dans un GOP ; cette qualité est évaluée par une mesure des distorsions correspondantes à des pertes de trames ou PSNR sur GOP partiel,

La figure 4, le principe d'un premier type d'abaque représentant la qualité vidéo en fonction des pas de quantification,

La figure 5, le principe d'un deuxième type d'abaques schématisant le débit exprimé en fonction des pas de quantification,

La figure 6, une manière de sélectionner un pas de quantification d'un abaque de référence,

Les figures 7a, 7b, 7c et 7d, un raffinement du choix de pas de quantification à utiliser lorsque plusieurs paramètres de quantification peuvent être utilisés,

Les figures 7e et 7f, deux exemples de raffinement du choix du pas de quantification à utiliser lorsque plusieurs paramètres de quantification sont candidats,

La figure 8, un exemple d'abaque représentant la qualité vidéo en fonction des pas de quantification pour plusieurs couches de résolution,

La figure 9, un organigramme décrivant les étapes du procédé selon l'invention,

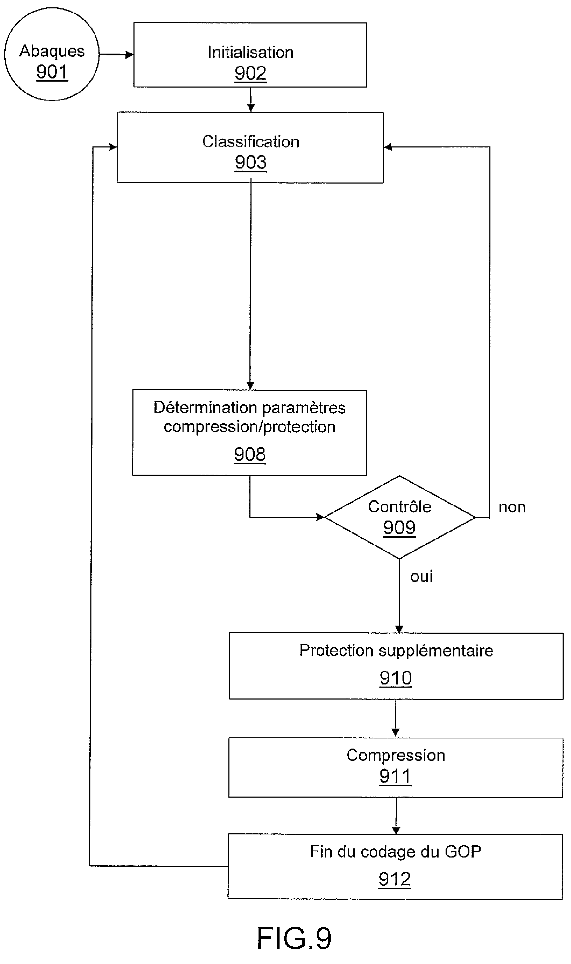

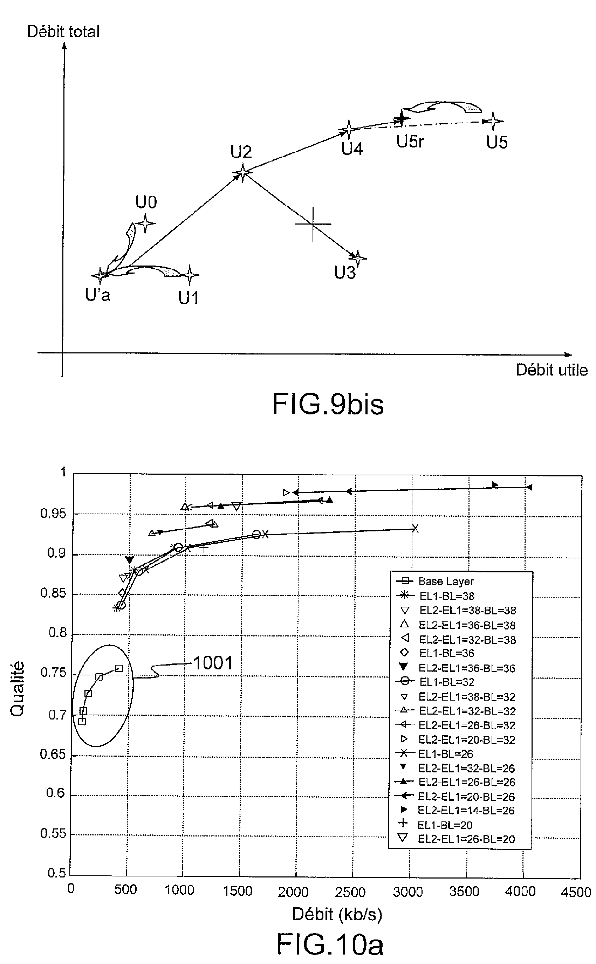

La figure 9bis, une illustration de la classification des utilisateurs du système en fonction du débit utile et total alloué à chacun,

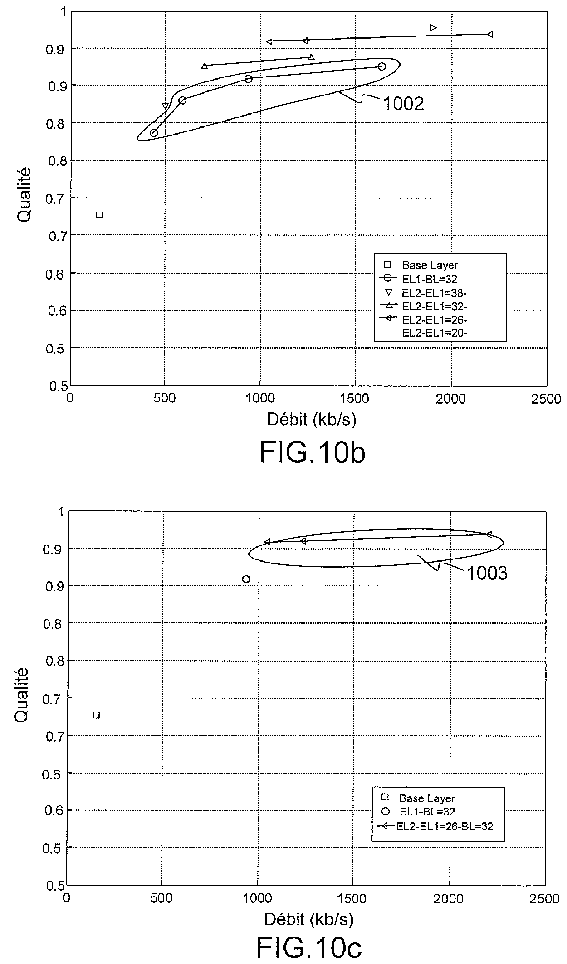

Les figures 10a, 10b et 10c, des exemples d'utilisation des abaques générés dans le but de déterminer le pas de quantification optimal pour chaque couche de résolution,

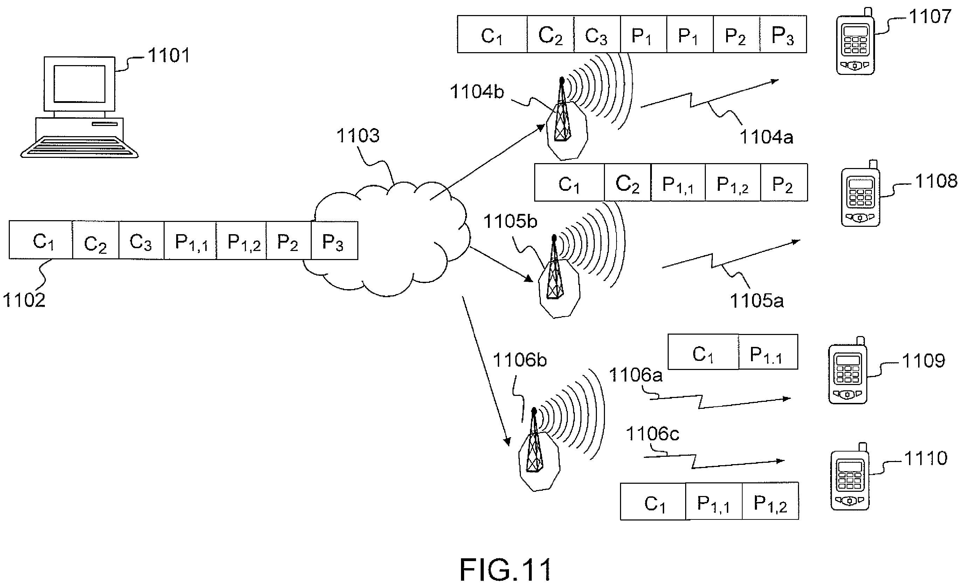

La figure 11 un exemple de mise en oeuvre du procédé selon l'invention pour la diffusion d'un flux vidéo vers une pluralité de récepteurs.

Les normes de compression vidéo les plus avancées proposent des méthodes permettant de hiérarchiser les données d'un flux vidéo compressé en fonction du niveau de résolution, temporelle ou spatiale, à laquelle la séquence vidéo sera, après décodage, effectivement affichée.

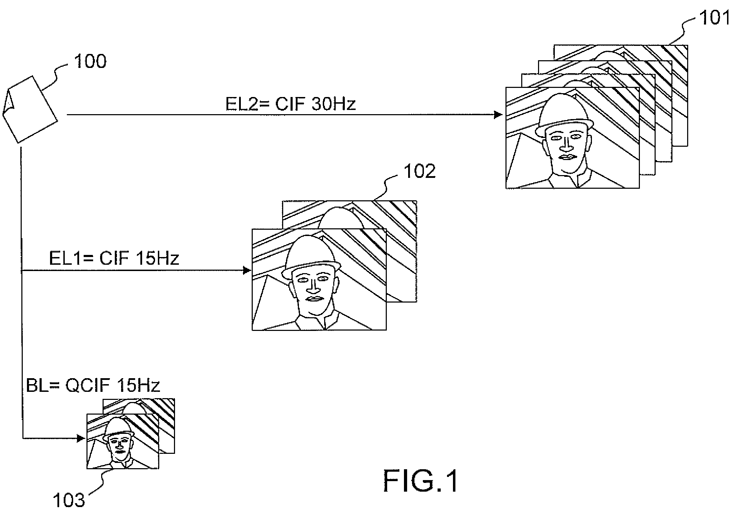

La figure 1 schématise un exemple de granularité temporelle et spatiale dans un flux vidéo compressé. Un codeur vidéo 100, par exemple un codeur respectant la norme de compression vidéo H.264/SVC telle que définie dans la référence « ITU-T Rec. H.264 | ISO/IEC 14496-10 annex G 2009», peut, au lieu de fournir un seul flux compressé correspondant à la séquence vidéo d'origine à une résolution spatiale et temporelle donnée, au contraire produire un flux qui contient plusieurs sous ensembles imbriqués et hiérarchisés. Le premier sous ensemble contient l'information relative au couple de résolutions spatiales et temporelles les plus faibles, ce premier sous ensemble est communément appelé couche de base, ou « base layer » en anglais. Les sous ensembles suivants contiennent l'information supplémentaire permettant, en combinaison avec les couches précédentes, de produire une séquence à un niveau de résolution, spatiale ou temporelle, supérieur. On parle alors de couche de résolution supplémentaire de niveau i, i étant un entier strictement positif, ou « enhancement layer i » en anglais.

Sur la figure 1 est représenté un exemple du principe de granularité. La couche de base 103 correspond à la séquence vidéo originale à la résolution spatiale standard QCIF (« Quarter Common Intermediate Format ») et à la résolution temporelle de 15 Hertz. Une première couche de résolution supplémentaire de niveau 1 102 est obtenue en ajoutant l'information nécessaire permettant de passer de la résolution spatiale QCIF à la résolution spatiale CIF. Enfin une deuxième couche de résolution supplémentaire de niveau 2 101 est obtenue en ajoutant aux deux précédentes couches l'information nécessaire permettant de passer de la résolution temporelle 15 Hz à la résolution temporelle 30Hz.

De façon générale, les couches de résolution sont hiérarchisées de façon à ce qu'une augmentation, soit de la résolution temporelle, soit de la résolution spatiale ou des deux en même temps soit effectuée entre une couche de niveau i et une couche de niveau i+1. En plus de la granularité temporelle ou spatiale, un codeur vidéo 100 peut également être adapté à produire une granularité dite en qualité ou en rapport signal à bruit (SNR). Ce type de granularité a pour effet de séparer le flux compressé en plusieurs couches hiérarchisées en fonction de la qualité perçue et indirectement du taux de compression appliqué.

Dans la suite de la description, la notion de granularité est illustrée uniquement par des exemples temporels ou spatiaux mais il est clair que l'invention, telle qu'elle est décrite, s'applique également à un flux compressé présentant plusieurs couches de granularité en qualité seules ou en combinaison avec une granularité temporelle et/ou spatiale.

Un tel flux compressé présentant de la granularité peut donc être décodé à plusieurs résolutions différentes. Chaque sous ensemble étant indépendant des autres, il peut également être transmis sur des canaux de propagation différents et donc être soumis à des pertes et/ou erreurs ayant des statistiques différentes.

Un des objectifs de la présente invention est de déterminer de façon optimale et dynamique les paramètres de compression et/ou de protection associés à un flux de données vidéo compressées offrant de la granularité temporelle et/ou spatiale. Le critère utilisé pour rendre optimale l'allocation desdits paramètres est la qualité finale perçue par l'utilisateur. Dans un contexte de diffusion de flux vidéo à travers un réseau maillé hétérogène et complexe, le destinataire n'a pas la connaissance de la séquence vidéo originellement transmise avant que celle-ci ne soit affectée par les étapes successives de compression et de transmission à travers un canal à pertes. La qualité perçue résulte donc d'une estimation objective ayant pour but de prendre en compte au mieux la vision humaine. Une mesure classiquement utilisée dans le domaine de l'évaluation objective de la qualité perçue est le PSNR, acronyme de « Peak Signal to Noise Ratio », qui est une mesure de distorsion utilisée en imagerie numérique et tout particulièrement en compression d'image. Elle est définie par :

$$PSNR = 10\,log_{10}(\frac{255^2}{MSE})$$

où $MSE = \sum_{i=1}^{M}\sum_{j=1}^{Q} \frac{(pl^*(i,j) - pl(i,j))^2}{M \times Q}$ , $M, Q$ sont les dimensions (largeur et hauteur) des images vidéo, et $pl(i,j)$

(*pl\**) donne la luminance du pixel à position (i,j) original (ou reconstruit) dans l'image.

La mesure du PSNR présente certains inconvénients lorsqu'il s'agit de mesurer et de comparer la qualité perçue d'une même séquence vidéo à différentes résolutions spatiales ou temporelles comme cela peut être le cas pour un flux compressé présentant une hiérarchie de résolutions. En effet cette mesure est basée sur une comparaison des pixels de deux images et nécessite des résolutions identiques pour effectuer une comparaison cohérente. De plus, même en filtrant la résolution la plus basse afin de pouvoir la comparer avec la résolution la plus élevée, l'influence du filtrage entraîne des résultats non satisfaisants et non corrélés avec les mesures subjectives qui sont les plus proches de la qualité réellement perçue par l'oeil humain.

Afin de prendre en compte le contenu de l'image dans sa globalité, une métrique modélisant plus finement le comportement de l'oeil humain peut être envisagée. Un exemple de mise en oeuvre du calcul d'une métrique objective de qualité perçue adaptée à la comparaison d'une même séquence vidéo à différentes résolutions est présenté dans le paragraphe suivant. Cet exemple n'est nullement limitatif et il est entendu que tout type de métrique permettant une mesure objective de la qualité perçue pour différentes résolutions peut être utilisée conjointement au procédé selon l'invention objet de la présente demande.

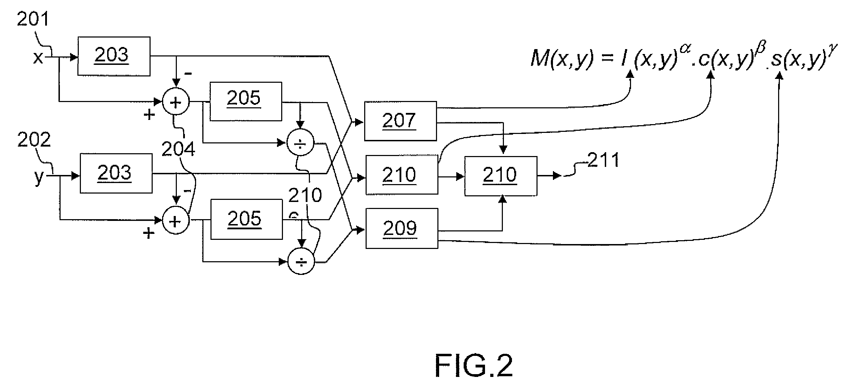

La figure 2 schématise les étapes de calcul effectuées pour estimer la qualité perçue entre une image de référence x 201 et la même image y 202 soumise à des distorsions dues à une compression avec pertes ou à une transmission sur un canal soumis à perturbations. Lesdites images sont extraites d'une séquence vidéo. La métrique utilisée repose sur un calcul évaluant les luminances et les contrastes des images de la séquence de référence et de la séquence obtenue après les étapes successives de compression, réception et décodage. Une estimation de la structure du contenu des deux séquences est également élaborée afin de prendre en compte l'information disponible dans la séquence de façon globale sans se limiter à la seule information contenue dans un pixel isolé. Une mesure de la luminance 203 des deux images est réalisée, par exemple en calculant une estimée de l'intensité moyenne. Le résultat de cette mesure est ensuite soustrait 204 de chacune des images afin de produire un nouveau signal image sur lequel est effectué une mesure du contraste 205, par exemple par un calcul de l'écart type dudit signal. Enfin une normalisation 206 est effectuée en divisant ledit signal par la mesure du contraste 205 effectuée. Le nouveau signal résultant de cette normalisation correspond à une estimée de la structure de chaque image.

Les résultats respectifs des trois mesures de luminance 203, contraste 205 ainsi que le signal normalisé représentant la structure de l'image sont fournis en entrée de trois modules de comparaison. Un premier module 207 effectue la comparaison des luminances des deux signaux image 201,202. Un deuxième module 208 effectue la comparaison des contrastes et un troisième module 209 réalise la comparaison des structures. Enfin un système de combinaison 210 produit à partir des trois comparaisons, une métrique de la qualité perçue de l'image 202 y vis-à-vis de l'image de référence 201 x. Cette métrique est formulée à l'aide de la relation suivante :

$$M(x,y) = l(x,y)^{\alpha} . c(x,y)^{\beta} . s(x,y)^{\gamma} \quad (1)$$

Où l(x,y) représente la comparaison des luminances des signaux x et y,
C(x,y) représente la comparaison des contrastes des signaux x et y,
S(x,y) représente la comparaison des structures des signaux x et y,
Et les coefficients $\alpha, \beta, \gamma$ sont des entiers strictement positifs déterminés par simulation.

La fonction de comparaison des luminances est par exemple donnée par la relation suivante :

$$l(x,y) = \frac{2\mu_x \mu_y + C_1}{\mu_x^2 + \mu_y^2 + C_1} \quad (2)$$

Où $\mu_x$ et $\mu_y$ sont les intensités moyennes des signaux x et y, et $C_1$ est une constante déterminée par simulation.
La fonction de comparaison des contrastes est par exemple donnée par la relation suivante :

$$c(x,y) = \frac{2\sigma_x \sigma_y + C_2}{\sigma_x^2 + \sigma_y^2 + C_2} \quad (3)$$

Où $\sigma_x$ et $\sigma_y$ sont les écarts types des intensités des signaux x et y, et $C_2$ est une constante déterminée par simulation.

Enfin la fonction de comparaison des structures est par exemple donnée par la relation suivante :

$$s(x,y) = \frac{\sigma_{xy} + C_3}{\sigma_x \sigma_y + C_3} \quad (4)$$

Où $\sigma_{xy}$ est le coefficient de corrélation entre les intensités des signaux x et y, et $C_3$ est une constante déterminée par simulation.

**Mesure de la qualité perçue d'un flux présentant de la granularité et transmis à travers un environnement contraint.**

En plus de l'influence des étapes de compression, et notamment de la quantification, qui est mesurée par la qualité perçue estimée selon la métrique précédemment décrite, une séquence vidéo peut également être soumise à des perturbations liées à sa transmission à travers un canal non parfait. On parle alors de la qualité de la vidéo perçue à la réception, ou PQoS qualité de service perçue par l'utilisateur final.

Comme il a été proposé dans la référence [1], l'expression de la moyenne espérée pour la distorsion de bout en bout après le codage de la source, la mise en paquets dans le réseau, l'opération de codage canal, suivi par l'impact du canal (modélisé) et des opérations converses, peuvent être utilisées comme une mesure pour comparer différentes réalisations dans les choix de compression/protection pour la séquence à transmettre.

De façon à obtenir assez de données pour opérer, ceci en particulier dans le cas d'une application avec protection inégale aux erreurs, pour laquelle il est important de prédire les proportions relatives de chacune des partitions, mais pour assurer que la prédiction du débit de compression fonctionne et surtout est moyennée sur plusieurs trames, l'optimisation proposée dans ce qui suit est exécutée sur la base d'un débit calculé groupe d'image (GOP) par groupe d'image. Sans sortir du cadre de l'invention, il est bien entendu qu'avec des modifications mineures, les explications qui vont suivre peuvent s'appliquer pour des images qui ne sont pas constituées en groupe d'image mais qui se présentent sous un autre format.

Le document [1] enseigne que la « sensibilité » pour un GOP fait de trames intra I suivies par N trames prédites P est exprimée en tenant compte du fait que, en pratique, les sensibilités des trames P dépendent des trames précédentes : si une trame P n'est pas correctement reçue, alors les suivantes, même si elles ont été transmises correctement ne seront pas reconstruites correctement. Le terme de sensibilité pour une image ou une trame fait ici référence à la mesure de la distorsion introduite par rapport à la séquence vidéo originale non compressée dans le cas où l'image ou trame en question est perdue ou erronée. En pratique, on retient dans le calcul de la sensibilité l'hypothèse que lorsqu'une trame est perdue, sa distorsion partielle dégrade suffisamment la distorsion moyenne du GOP pour que la contribution de la distorsion des trames suivantes éventuelles devienne négligeable. L'impact des trames précédentes qui n'ont pas été correctement reçues est en conséquence pris en compte en utilisant une probabilité conditionnelle sur les précédentes à corriger. Ceci conduit à l'expression pour la séquence codée standard au format IP$_N$ (Intra, Prédite) pour la distorsion moyenne d'un GOP

$$\hat{D}_{gop} = \prod_{i=0}^{N}(1-P_e)^{\beta_i.n_i}.D_o + \sum_{i=0}^{N}[\prod_{j=0}^{i-1}(1-P_e)^{\beta_j.n_j}.(1-(1-P_e)^{\beta_i.n_i}).D_{loss_i}] \quad (5)$$

avec $n_i$ la taille de la $i^{th}$ P-trame, avec $D_{loss_i}$ la distorsion observée lorsque la $i^{th}$ P-trame est perdue alors que les trames précédentes sont correctes, avec $D_o = D_{oN}$ la distorsion moyenne du GOP sans erreur, avec $\beta_i$ la fraction de la trame qui peut être partiellement bruitée sans désynchronisation du flux et pour un canal sans mémoire avec une probabilité d'erreur pour le bit $P_e$.

Avec les valeurs expérimentales estimées dans [2] pour les paramètres $\beta_i$, soit : 1 - $\beta_0 \approx 0.25$ et 1 - $\beta_i \approx 0.15$), il apparaît que l'équation (5) est exploitable une fois que sont connues, pour tous les i, les valeurs de la taille de la $i^{th}$ P-trame $n_i$, la distorsion observée lorsque la $i^{th}$ P-trame est perdue alors que les trames précédentes sont correctes $D_{loss_i}$ et enfin la distorsion moyenne du GOP sans erreur $D_o$.

La relation (5) définit donc la distorsion moyenne d'un GOP dans le cas d'un flux compressé présentant une seule résolution.

Comme introduit précédemment, un codeur source de nouvelle génération peut générer un flux compressé présentant intrinsèquement plusieurs résolutions, temporelles et/ou spatiales, imbriquées en sous-ensembles hiérarchisés. Dans le cas d'un tel flux, la distorsion moyenne d'un GOP peut être évaluée par la relation suivante, adaptée à partir de l'équation (5) :

$$\overset{\wedge}{D}_{gop} = \prod_{i=0}^{N}\prod_{k=1}^{C}(1-P_e)^{\beta_{i,k}\cdot n_{i,k}}.D_0 +$$

$$\sum_{i=0}^{N}\sum_{k=1}^{C}[\prod_{j=0}^{N}\prod_{l=1}^{k-1}(1-P_e)^{\beta_{i,l}\cdot n_{i,l}}\prod_{j=0}^{i-1}(1-P_e)^{\beta_{j,k}\cdot n_{j,k}}(1-(1-P_e)^{\beta_{i,k}\cdot n_{i,k}})D_{loss_{i,k}}] \quad (6)$$

avec C le nombre de couches de résolution dans le flux compressé (C=1 dans un cas mono-résolution), $n_{i,k}$ la taille de la $k^{ieme}$ couche de résolution de la $i^{ème}$ P-trame, $D_{loss\,i,k}$ la distorsion observée lorsque la $k^{ieme}$ couche de résolution de la $i^{ème}$ P-trame est perdue alors que les trames précédentes sont correctes, avec $D_0$ la distorsion moyenne du GOP sans erreur, avec $\beta_{i,k}$ la fraction de la trame qui peut être partiellement bruitée sans désynchronisation du flux et pour un canal sans mémoire avec une probabilité d'erreur pour le bit $P_e$.

Naturellement, dans le cas où une correction d'erreur est introduite, l'expression de la probabilité d'erreur $P_e$ devra aussi être établie. Par exemple, l'emploi de codes convolutifs poinçonnés à rendements compatibles (RCPC) sur canal Gaussien avec décodage à entrées souples nous permettra d'utiliser la borne de la probabilité d'erreur établie dans [3]:

$$P_e \le \frac{1}{P}\sum_{d=d_{free}}^{\infty}a_d.P_d$$

avec $d_{free}$ la distance libre du code, $a_d$ le nombre de chemins existants, $P_d = \frac{1}{2}erfc(\sqrt{\frac{d.E_S}{N_a}})$ la probabilité pour qu'un chemin erroné à la distance $d$ soit sélectionné lorsque $SNR = E_S/N_0$.

Des expressions similaires peuvent aussi être établies pour un partitionnement de données ou des modes de mélange de trames, modes qui peuvent être en particulier utilisés dans le cas où une protection inégale aux erreurs est considérée, telle que celle décrite dans la demande de brevet du Demandeur FR 2 903 253.

## Estimation de la longueur et des informations de distorsions partielles

Pour déterminer une estimée de la distorsion moyenne d'un GOP à l'aide de la relation (6), il est au préalable nécessaire d'estimer les longueurs respectives de chaque couche de granularité à l'intérieur de chaque trame ($n_{i,k}$), la distorsion observée lorsque la $k^{ieme}$ couche de résolution de la $i^{ème}$ P-trame est perdue ($D_{loss\,i,k}$) et la distorsion du GOP ($D_o$).

$D_o$ correspond à la distorsion moyenne d'un GOP due à l'opération de compression. Cette estimée est donnée, en fonction du pas de quantification QP, par l'évaluation de la métrique de qualité perçue présentée à l'appui de la figure 2 et ce pour chaque résolution disponible. Afin d'homogénéiser et de permettre la comparaison ainsi que la moyenne des métriques pour chaque résolution spatiale ou temporelle différente, il est nécessaire avant d'appliquer le calcul de ladite métrique de filtrer la résolution courante pour la ramener à la résolution maximale disponible. Le filtrage opéré consiste en une interpolation spatiale dans le cas d'une augmentation de la résolution spatiale ou d'une moyenne temporelle dans le cas d'une augmentation de la résolution temporelle.

La longueur totale $l_{total}$ du GOP est déterminée en effectuant une simple division du débit utile par le nombre d'images par seconde dans le cas où la durée d'un GOP est égale à une seconde. Dans un cas plus général, il convient de multiplier ce résultat par la durée, en secondes, d'un GOP.

La longueur d'une trame Intra $l_{Intra}$ est aussi considérée comme un paramètre connu grâce aux abaques décrits dans la suite du document.

La longueur d'une trame prédite P peut être déterminée par la relation suivante : $l_{P_i} = \frac{l_{total} - l_{Intra}}{GOP_{size} - 1}$ , où $GOP_{size}$ est la taille d'un GOP.

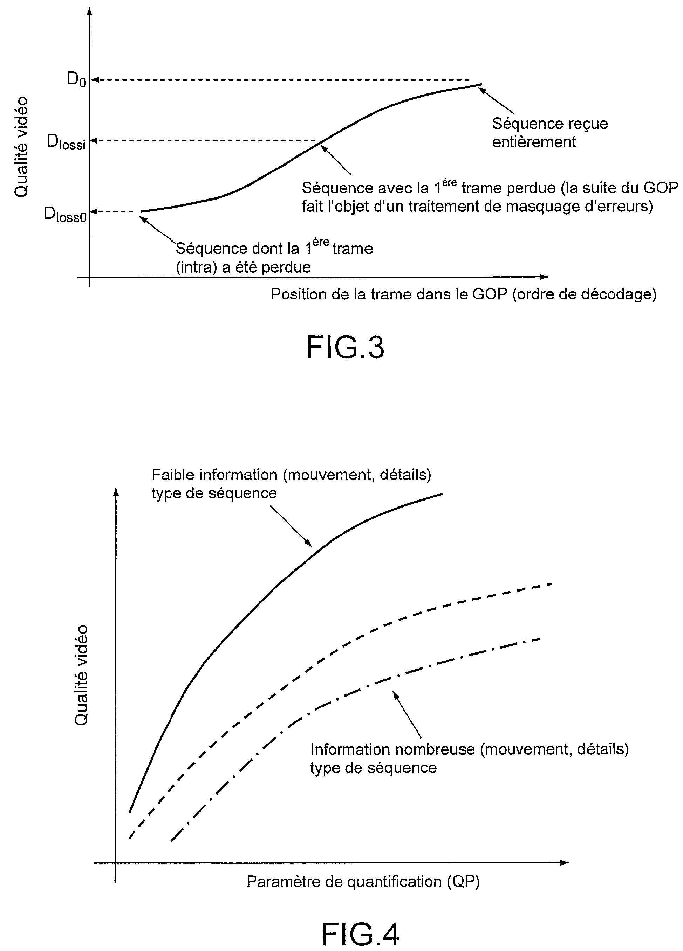

Le même principe de proportionnalité peut être appliqué sur les différentes couches de résolution, chacune ayant son débit utile et connaissance des tailles pour la partie Intra grâce aux abaques. Comme illustré à la figure 3, la qualité partielle (exprimée en termes de distorsion partielle) est une fonction croissante avec le nombre d'images décodées. Faisant suite à des observations expérimentales (incluant les remarques faites dans la référence [1]) les expressions suivantes sont proposées et sont appliquées successivement pour le calcul de la contribution relative, en termes de distorsion, de chaque trame pour chaque niveau de résolution k en commençant par la résolution la plus basse:

-

$$D_{loss_{0,k}} = \frac{1}{3} D_0 \, ,$$

-

$$D_{loss_{i,k}} = D_{loss_{0,k}} + \frac{i}{GOP_{size}} \times \left( D_0 - D_{loss_{0,k}} \right)$$

**Principe de la prédiction de débit et/ou de qualité à partir d'abaques de référence**

Une méthode permettant de prédire le débit et/ou la qualité d'une séquence vidéo compressée à une résolution donnée est décrite dans la demande de brevet FR 0805513 du Demandeur. Cette méthode est perfectionnée par la présente invention dans le but de proposer une solution compatible de flux présentant de la granularité temporelle et/ou spatiale. Le principe de l'utilisation d'abaques de références pour prédire le débit et/ou la qualité dans le cas d'un flux mono résolution est rappelé dans ce paragraphe.

Dans certains cas d'application pour lesquels la connaissance de la séquence vidéo à transmettre n'est pas, à priori, connue, les paramètres de compression peuvent être déterminés par l'intermédiaire d'abaques qui donnent une estimation statistique des relations d'une part entre la qualité perçue et le pas de quantification, et d'autre part entre le débit utile et le pas de quantification pour une séquence vidéo dont le contenu est proche de celui de la séquence effectivement transmise. En particulier, des abaques peuvent être définis pour un type de séquence représentant une contenu où l'information est importante en termes de mouvements et de détails, et a l'opposé pour un type de séquence représentant un contenu avec peu d'information.

Le paramètre de pas de quantification (QP) est celui utilisé dans les exemples qui suivent mais l'utilisation d'abaques ainsi que le procédé selon l'invention s'appliquent de façon similaire à tout autre type de paramètre de compression. De plus, la notion de paramètre de pas de quantification est une notion générique dans le domaine de la compression vidéo et doit être compris dans son sens le plus large, c'est-à-dire un paramètre permettant de déterminer le niveau de quantification des données compressées et donc indirectement le débit utile. Dans les exemples suivants, le débit utile augmente avec le pas de quantification, mais dans d'autre cas, pour un codeur source qui utiliserait une référence QP différente, le débit utile peut au contraire diminuer lorsque le pas de quantification augmente. Le principe de la détermination de la qualité vidéo à partir d'abaques tel que décrit à l'appui des figures suivantes reste inchangé à la différence près que l'abscisse des courbes correspond dans ce deuxième cas à l'inverse de QP.

La figure 4 illustre le principe du premier ensemble d'abaques, qui donnent l'information sur la qualité vidéo en fonction du paramètre de quantification pour différentes réalisations de flux vidéo. Un des objectifs du procédé selon l'invention est de répartir de façon optimale le débit alloué à la compression et celui alloué à la protection. Lorsque plusieurs codes correcteurs sont disponibles on génère autant de courbes de qualité vidéo que de rendements possibles R afin de disposer de plusieurs couples {QP,R} pour la même qualité vidéo perçue. Les abaques du type de la figure 4 permettent donc, pour une qualité perçue donnée de déterminer tous les couples {QP,R} qui satisfont à ce critère.

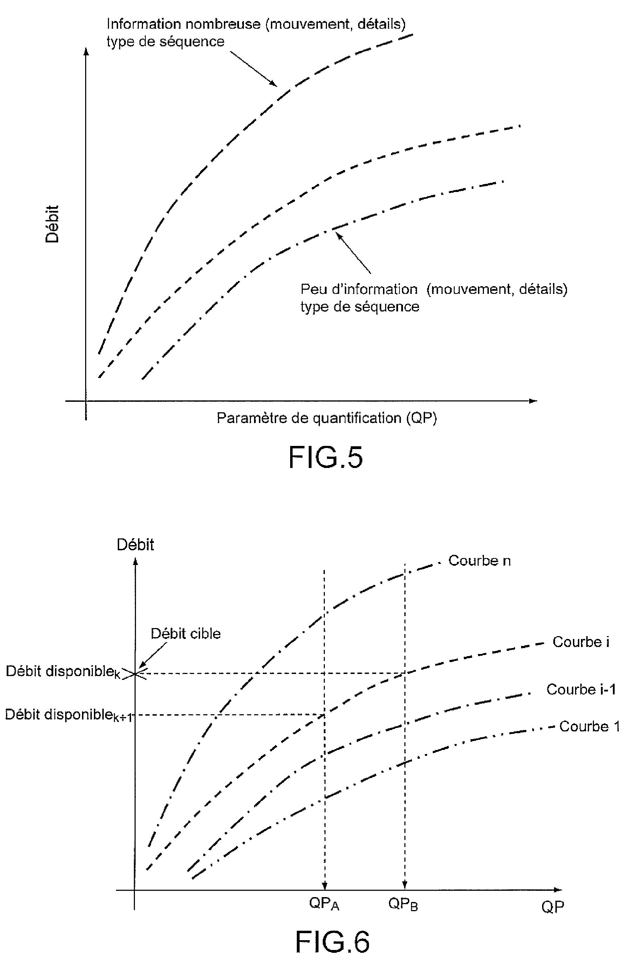

La figure 5 illustre ensuite le principe du second ensemble d'abaques, fournissant une information sur le débit en fonction du paramètre de quantification pour les mêmes réalisations de flux vidéo. Ce type d'abaques permet de déterminer le débit utile en fonction du paramètre QP. En combinaison avec les informations obtenues avec les abaques de la figure 4, on obtient donc, pour une valeur de qualité perçue donnée, plusieurs solutions définies par une valeur de débit utile et une valeur de débit alloué à la protection qui est obtenu directement à partir de la valeur du rendement R du code correcteur.

Une autre exploitation possible des abaques consiste à définir un débit cible total, incluant le débit utile et le débit de protection, à ne pas dépasser, et en fonction de ce débit cible, déterminer les meilleurs valeurs de débit utile et de débit alloué à la protection permettant d'obtenir la meilleure qualité perçue.

Le paragraphe suivant précise différents cas de figure pour la détermination de QP en fonction du débit utile (abaque de la figure 5).

Les abaques des figures 4 et 5 permettent, pour tout point de départ (valeurs par défaut, information du GOP précédente, ..) d'établir la courbe de référence qui sera utilisée pour déterminer le débit espéré basé sur les paramètres de quantification QP possibles et la qualité vidéo correspondante espérée.

L'utilisation des courbes pratiquement peut être la suivante :

- Trouver le paramètre de quantification QP possible pour un débit cible sur une courbe identifiée,
- Pour une courbe identifiée, l'abaque est lu et le meilleur QP correspondant (le candidat le plus proche de l'abaque) est sélectionné pour l'essai. Bien que l'abaque porte sur une large gamme de QP et de débit possibles, ces valeurs ne sont pas continues, ainsi basiquement il est possible soit :

1) de trouver une réalisation du débit assez proche du débit cible pour respecter sa définition à la marge près,
2) de ne pas être en position pour sélectionner un candidat immédiatement.

Dans le premier cas, illustré par le candidat $QP_B$ sur la figure 6, le candidat $QP_{closest}$ est immédiatement sélectionné et peut être utilisé pour l'encodage de la séquence. Le candidat $QP_B$ est le candidat le plus proche du débit cible $Db_{cible}$ pour l'abaque i, dans le présente exemple, ceci correspond au débit cible.

Dans les autres cas, une étape de raffinement doit être exécutée qui est précisée ci-dessous.

Raffinement de la sélection du meilleur paramètre de quantification QP

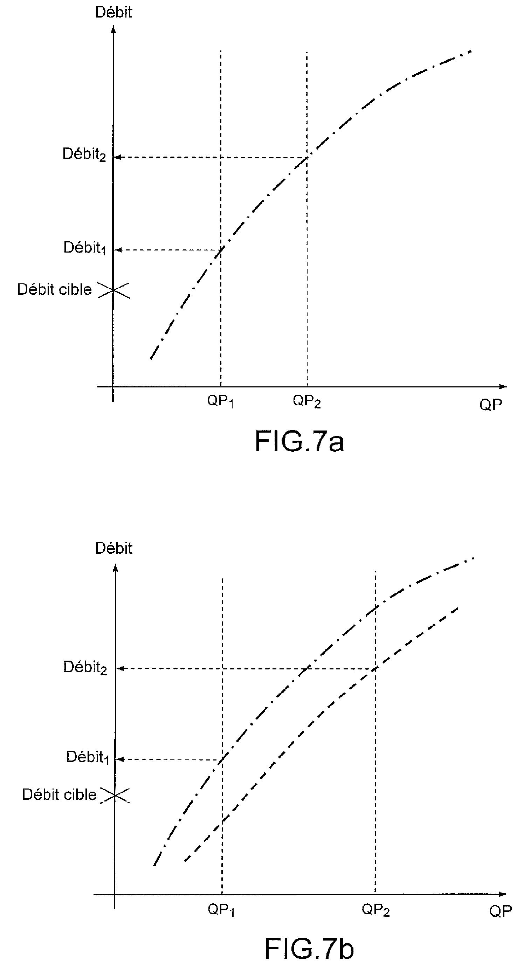

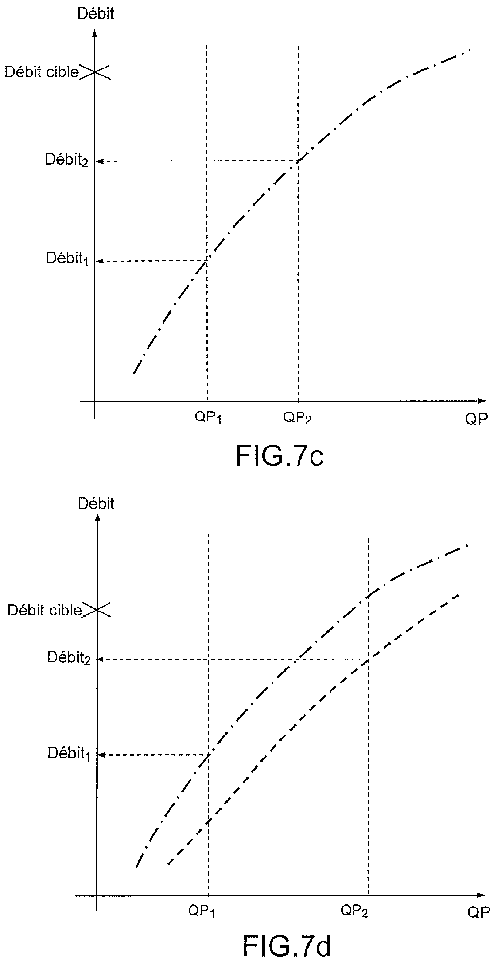

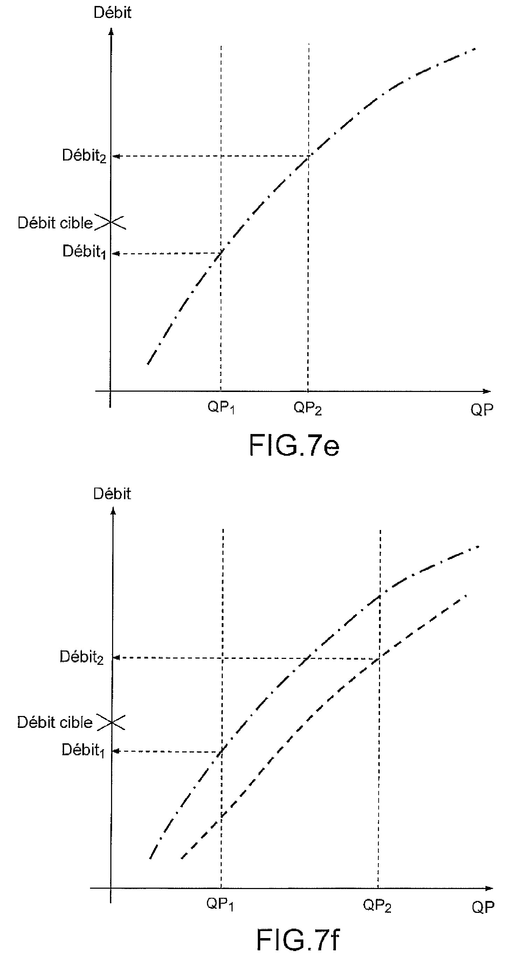

Une étape de raffinement peut être nécessaire, soit lorsqu'il n'est pas possible de trouver un candidat intermédiaire à partir de l'abaque initial de l'opération de lecture, ou encore lorsque ayant exécuté plusieurs essais, différents couples de réalisations (débit, QP) ont été obtenus à partir des essais sur la portion courante de la séquence. Plusieurs essais peuvent être exécutés, qui permettront de déterminer plus précisément le comportement de la portion (GOP) de la séquence courante, typiquement si le choix de la courbe initiale de prédiction n'était pas bon. Toutefois, du fait du nombre limité d'essais qu'imposent nécessairement les contraintes du temps réel et d'exploitation pratique, le choix final du paramètre de quantification QP devra souvent être fait sans avoir trouvé de QP correspondant parfaitement à la cible débit ou qualité, ce qui signifie qu'un choix doit être fait avec seulement la connaissance disponible. Différents cas peuvent être envisagés qui ont été représentés sur les figures 7a, 7b, 7c, 7d, 7e et 7f:

Cas 1 - tous les QP testés (sur une ou plusieurs courbes) dépassent la cible de manière significative,
Cas 2 - tous les QP testés (sur une ou plusieurs courbes) arrivent en dessous de la cible de manière significative,
Cas 3 - le débit de la cible est trouvé entre 2 QP, trouvé au-dessus une courbe unique,
Cas 4 - le débit cible est trouvé entre 2 QP, trouvés au-dessus de deux courbes différentes,

Pour les cas 1 et 2, différentes stratégies, de la plus sécuritaire à la plus risquée, peuvent être implémentées. Ces stratégies correspondent à une approche similaire : soit prendre la valeur testée la plus proche et l'utiliser, ou essayer avec une autre, en faisant totalement confiance à l'abaque supposée le meilleur.

En effet, alors qu'on pourrait croire au premier abord que l'abaque doit donner immédiatement le meilleur QP, il ne faut pas oublier que le vrai problème est de déterminer à partir des informations des GOP précédents, quel abaque correspond le mieux pour le GOP courant de la séquence vidéo à coder. Une séquence vidéo pouvant grandement changer d'un moment à un autre (changement de scène, augmentation ou diminution forte du mouvement, détails nouveaux introduits, ...) l'abaque valable à un certain instant t peut en effet se révéler fausse au moment suivant t+1, et donc ne pas permettre une bonne prédiction.

Dans la suite de la description, une approche ayant un niveau de risque contrôlé sera utilisée :

- dans le cas 1, utiliser $QP_{leplusproche}+\varepsilon$
- dans le cas 2, utiliser $QP_{leplusproche}-\varepsilon$

avec $\varepsilon$ une valeur entière et positive prédéterminée par simulation. D'autres adaptations peuvent être considérées ; par exemple en choisissant l'incrément en fonction de la distance relative entre le débit atteint avec $QP_{leplusproche}$ comparé au débit cible ;

- dans le cas 3, utiliser une relation de barycentre :

$$QP_{\text{inf}} + \frac{rate_{cible} - rate_{\text{inf}}}{rate_{\text{sup}} - rate_{\text{inf}}} \times \left( QP_{\text{sup}} - QP_{\text{inf}} \right)$$

où $rate_{cible}$ est le débit cible, et pour les deux couples candidats (QP1, débit1) et (QP2, débit2), $rate_{\text{inf}}$ représente le débit le plus faible, $rate_{\text{sup}}$ le débit le plus élevé, $OP_{\text{inf}}$ représente le pas de quantification le plus faible et $QP_{\text{sup}}$ le pas le plus élevé ;
- dans le cas 4 qui correspond au cas le plus difficile, ce qui en pratique correspond à un scénario où l'abaque correct pour la séquence devant être codée n'a pu être déterminé. Ici à nouveau, l'opération de calcul du barycentre proposé pour le cas 3 est possible, mais pourra se révéler moins efficace si la courbe optimale a une pente très différente de la courbe sélectionnée ou bien des deux courbes sélectionnés. Une autre solution consiste, par exemple, à insérer dans l'interpolation un troisième point (s'il est disponible) : les trois couples (débit, QP) étant utilisés pour définir une courbe sur laquelle une interpolation peut être effectuée directement. Dans les tests décrits ci-après, c'est la formule du barycentre qui sera utilisée.

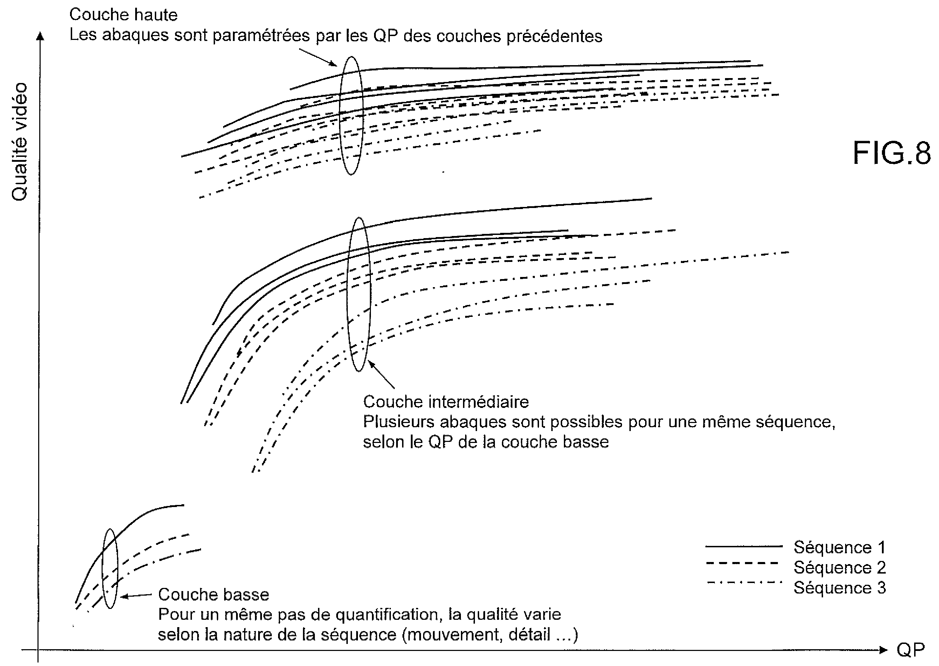

La figure 8 illustre un exemple d'abaques représentant la qualité vidéo en fonction du pas de quantification lorsque plusieurs couches de résolution sont disponibles. Dans l'exemple décrit, on considère trois couches de résolution. La couche de base, qui correspond à la résolution la plus faible, est définie par une résolution spatiale QCIF et une résolution temporelle égale à 15 Hz. La première couche de résolution supplémentaire est définie par une résolution spatiale CIF (augmentation d'un facteur 2 par rapport à la couche de base) et une résolution temporelle égale à 15 Hz. Enfin la dernière couche de résolution supplémentaire propose une augmentation de la résolution temporelle à une fréquence de 30 Hz.

Trois types de séquence différents sont représentés. Les abaques de la couche de base sont similaires à celles obtenues pour un flux mono résolution QCIF, 15Hz telles que celles de la figure 4. Les abaques de la première couche de résolution supplémentaire sont déterminés d'une part pour plusieurs valeurs de pas de quantification de la couche de base, et d'autre part pour différentes valeurs de pas de quantification de la résolution supplémentaire. En effet, au sein du flux compressé, chaque sous ensemble représentant une couche de granularité temporelle ou spatiale est compressé en utilisant un pas de quantification différent. De façon identique la dernière couche de résolution est représentée par un ensemble d'abaques identifiés chacun par le type de séquence, le pas de quantification de la couche de base, celui de la première couche supplémentaire et enfin l'abscisse fournit l'information de pas de quantification de la dernière couche de résolution.

Afin de produire une estimée de la qualité vidéo pour toutes les résolutions, cette dernière est calculée dans tous les cas pour la résolution la plus importante (ici la résolution CIF, 30Hz). Pour ce faire, les résolutions inférieures (QCIF,15Hz et CIF,15Hz) sont filtrées afin de produire une séquence filtrée à la résolution la plus élevée, puis la métrique de qualité perçue est calculée sur la séquence filtrée à l'aide de la relation (6). Le filtrage utilisé consiste par exemple en une interpolation spatiale à partir des pixels voisins dans la même image ou une interpolation temporelle à partir des pixels voisins des images voisines antérieures et ultérieures.

Les abaques de la figure 8 sont ensuite exploités, indépendamment pour chaque résolution et en commençant par la plus faible, de façon identique à la méthode décrite dans le cas d'un flux mono résolution.

**Détermination des paramètres de compression et protection**

La figure 9 schématise l'organigramme illustrant les étapes du procédé selon l'invention qui permet de déterminer les paramètres de compression, en particulier le pas de quantification et le débit utile, et les paramètres de protection et ce pour chaque couche de granularité.

Le procédé selon l'invention s'applique pour un flux compressé comportant un nombre C de couches de granularité, ce nombre étant borné par la valeur $C_{max}$ du nombre de couches effectivement utilisées en regard de l'efficacité du système. Typiquement un nombre maximum de 3 couches est un choix efficace pour un codeur de type H.264/SVC.

A partir de la métrique de qualité perçue mise au point, on peut définir une valeur minimum $D_{min}$ de qualité acceptable pour le système considéré ainsi qu'une valeur maximale $D_{max}$ de qualité, pour chaque couche de résolution, au-delà de laquelle une augmentation de débit ne présente plus d'effet significatif pour l'amélioration de la qualité. La qualité maximale $D_{max}$ peut également être déterminée par rapport aux besoins du système visé. Dans le cas où la métrique décrite à l'appui de la figure 2 est utilisée, des valeurs typiques utilisables pour $D_{min}$ et $D_{max}$ sont par exemple $D_{min}$=0.7 et $D_{max}$={0.75,0.9, 0.98 } pour respectivement des couples de résolution spatiale et temporelle (QCIF 15Hz), (CIF 15Hz) et (CIF 30Hz)..

Le procédé selon l'invention s'applique avantageusement au cas d'une diffusion du même flux compressé vers une pluralité de destinataires et ce à travers un nombre connu de liens de communications. Plusieurs utilisateurs peuvent être regroupés derrière un même lien. On considère par la suite un nombre K, strictement positif, de liens de communication définis chacun par le couple de paramètres $\{d_i, P_{ei}\}$ qui représentent respectivement le débit disponible sur le lien d'indice i et la probabilité d'erreur intervenant sur ce même lien.

*Préparation des abaques*

Dans une étape préliminaire 901, l'ensemble des abaques introduits à la figure 8 sont générés pour chaque couche de granularité. Ces abaques sont obtenus en faisant varier les pas de quantification du codeur source pour différentes séquences de référence, représentatives des scénarios d'utilisation considérés ou à défaut prises dans un ensemble de séquences classiquement utilisées par l'Homme du métier du codage vidéo. Par exemple, les séquences « Foreman » ou « Akyio » sont des séquences de références classiquement utilisées pour effectuer des tests de routine dans le domaine de la compression vidéo. Les deux types d'abaques mentionnés aux figures 4 et 5 sont générés, à savoir un premier abaque représentant la qualité perçue en fonction du pas de quantification de la couche de granularité considérée et un second abaque représentant le débit utile en fonction de ce même pas de quantification.

On notera que les abaques ne sont valables que pour le codeur qui a permis de les générer. En cas d'utilisation de plusieurs codeurs différents, les abaques de chaque codeur doivent être générés avant de démarrer le procédé de détermination des paramètres de compression et protection. Dans le cas où les abaques ne correspondent pas effectivement au codeur source utilisé, une dégradation des performances est à attendre bien que la mise en oeuvre du procédé selon l'invention reste inchangée. Les valeurs de $D_{min}$ et $D_{max}$ sont déduites de ces abaques.

Dans une variante de réalisation de l'invention, la séquence vidéo effectivement transmise est connue du contrôleur, qui est le dispositif exécutant le procédé selon l'invention, et dans ce cas la relation entre les débits et qualités vidéo est déterminée pour chaque GOP et pour un ensemble de paramètres de compression à appliquer à la séquence. Le recours à un abaque n'est alors pas nécessaire.

*Initialisation*

Dans une phase d'initialisation 902, les paramètres représentatifs du codeur source, notamment les valeurs de $C_{max}$, $D_{min}$ et $D_{max}$ sont renseignés. Une séquence de référence et ses abaques associés sont choisis de façon à représenter au mieux le scénario considéré. Les abaques peuvent être accompagnés d'une information concernant les résolutions recommandées par rapport aux différentes contraintes du système, en termes de débit et de taux d'erreur notamment. Dans une variante de réalisation, un groupe de séquences de référence peut être sélectionné et une moyenne est ensuite effectuée sur les abaques dudit groupe afin de produire un abaque de référence permettant d'initialiser le procédé. Les paramètres de compression sont initialisés aux paramètres par défaut représentatifs du scénario considéré, en particulier le nombre de couches de résolution ainsi que leurs débits associés.

*Classification*

Un des objectifs du procédé selon l'invention est d'attribuer à chaque lien de transmission et/ou à chaque utilisateur une couche de granularité avec des paramètres de compression et protection donnés en fonction notamment du débit disponible et de la probabilité d'erreur affectant ces liens.

Dans une étape de classification 903, les K utilisateurs associés à au plus K liens de transmission distincts et définis chacun par le couple de paramètres {débit disponible, probabilité d'erreur affectant ce lien} sont rangés par qualité perçue croissante. Une métrique de qualité est déterminée pour chacun des utilisateurs $U_i$ à l'aide de la relation (1) et en prenant en compte soit les paramètres de compression/protection de la phase d'initialisation soit ceux déterminés par le procédé selon l'invention antérieurement, par exemple à la seconde précédente.

Dans une sous étape 903.1, pour chaque utilisateur $U_i$ et pour chaque résolution disponible, on calcule à partir du débit disponible et de la probabilité d'erreur, le couple {débit utile, débit de protection} qui offre la meilleure qualité possible en utilisant les abaques du type des figures 4 et 5 et la relation (6) et en appliquant la méthode décrite précédemment. Plus précisément, l'information de débit disponible permet de générer un nombre défini de couples {débit utile, débit de protection} dont la somme ne dépasse pas le débit disponible et qui soient compatibles d'une part des possibilités offertes pas le codeur source en terme de granularité de débit et d'autre part des codes correcteurs disponibles. Dans un second temps, les abaques des figures 4 et 5 permettent d'obtenir, pour chaque débit utile une estimation de la qualité moyenne $D_0$ d'un GOP sans erreurs. La relation (6) permet ensuite, pour chaque résolution disponible et pour chaque rendement de code correcteur disponible d'en déduire la qualité perçue estimée pour une transmission sur un canal donné et un flux protégé par un code correcteur de tel rendement. On retient enfin le couple {débit utile, débit protection} qui donne la meilleure qualité perçue estimée parmi celles déterminées. La qualité perçue est déterminée, pour chaque résolution, par rapport à la séquence de référence non compressée à résolution maximale tel qu'expliqué dans le paragraphe précédent associé à la figure 2.

Dans une sous étape 903.2, on retient ensuite, toujours pour chaque utilisateur $U_i$ la résolution $C_{best}$ qui correspond à la meilleure qualité perçue obtenue. L'utilisateur $U_i$ est alors défini par le couple de paramètres débit utile et débit total ($Db_{utile}$, $Db_{total}$).

Dans le cas où on considère un flux comportant uniquement des données utiles et une section de redondance de rendement R, le débit total est obtenu par la relation $Db_{total} = Db_{utile} / R$. Dans le cas où d'autres données sont contenues dans le flux binaire considéré, en particulier des données entêtes pour l'encapsulation réseau, ces données doivent bien entendu être prises en compte dans le calcul du débit total. Si un des utilisateurs $U_i$ présente une valeur de qualité perçue inférieure au seuil minimum $D_{min}$ requis, alors il est exclu de l'étape 903 de classification.

Dans une sous étape 903.3, les utilisateurs $U_i$ retenus à l'issue des étapes précédentes 903.1 et 903.2 sont ensuite classés sur un graphe en deux dimensions, d'abscisse $Db_{utile}$ et d'ordonnée $Db_{total}$ tel que représenté à la figure 9bis. Cette représentation permet de définir une fonction f telle que $Db_{total}=f(Db_{utile})$. Deux cas de figure se présentent alors.

Si la fonction f est strictement croissante sur l'ensemble des points correspondant aux utilisateurs retenus, alors la méthode de classification suivante est appliquée.

Sous étape 903.4

Les K utilisateurs sont regroupés en groupes homogènes en fonction de la métrique de qualité perçue obtenue et de façon à ce qu'une différence de qualité minimum soit observée entre chaque groupe et que la qualité perçue ne dépasse pas un seuil maximum entre chaque élément d'un groupe ainsi défini. On note $\chi$ le nombre de groupes déterminés. Plusieurs cas de figure peuvent alors apparaitre.

Si $\chi=1$, une seule résolution transmise à tous les utilisateurs est la meilleure solution, d'autant plus que la compression par couches de granularité entraine une augmentation du débit utile par rapport au même flux compressé directement à la seule résolution la plus élevée. Néanmoins, un partage des résolutions disponibles peut être réalisé entre les différents éléments du groupe en associant les couches de résolution les plus basses aux liens de transmission présentant la métrique de qualité la plus faible et inversement. Un choix possible consiste à prendre deux couches de résolution (C=2) ou au maximum trois classes (C=3).

Si $2 \leq \chi \leq C_{max}$, on choisit un nombre de couches de résolution C= $\chi$ et on attribue à chaque groupe une couche de résolution en fonction de leur métrique de qualité associée. La résolution la plus basse est attribuée pour la métrique la plus faible et inversement.

Si $\chi > C_{max}$, le nombre de couches de résolution est limité à C= $C_{max}$. La basse résolution est par exemple attribuée au premier groupe, dans l'ordre de classification préalablement établi, pour lequel la métrique de qualité dépasse la valeur de $D_{min}$. La plus haute résolution est par exemple attribuée au groupe obtenant la meilleure métrique de qualité, et les autres couches de résolution intermédiaires sont réparties régulièrement entre les groupes classés entre les deux groupes précédemment identifiés. Selon les besoins spécifiques du système, il est également possible de privilégier certains utilisateurs ou groupes d'utilisateurs et donc d'adopter une répartition des couches de résolution de façon moins homogène.

Si la fonction f n'est pas strictement croissante, alors les besoins des différents utilisateurs sont plus difficilement conciliables. Des choix doivent être faits qui potentiellement vont dégrader le service offert à un ou plusieurs utilisateurs pour garantir un service minimum global. Ceci est du au fait que pour une même valeur de qualité perçue, deux utilisateurs peuvent présenter une répartition entre le débit utile et le débit de protection très différente. Si on applique la classification décrite précédemment, ces deux utilisateurs vont se retrouver dans le même groupe et bénéficieront des mêmes débit utile et rendement de code correcteur alors que leurs besoins sont différents.

Sous étape 903.5

Lorsque la courbe f présente une décroissance entre deux points consécutifs, cela est l'illustration d'une variation importante du ratio entre le débit utile et le débit de protection. Sur la figure 9bis, ce cas correspond aux utilisateurs U2 et U3 ou encore aux utilisateurs U0 et U1. U2 (respectivement U0) présente un débit utile plus faible que U3 (respectivement U1 mais un débit total plus important. Une fois les groupes homogènes déterminés, pour chacun des groupes, il convient donc de vérifier si la fonction f est croissante sur l'ensemble des points. Si plusieurs points consécutifs ne vérifient pas cette croissance, alors il convient de modifier la composition du groupe selon une ou plusieurs des variantes suivantes.

Dans une première variante de réalisation de l'invention, pour les utilisateurs concernés l'étape 903.2 est réexécutée en choisissant une autre résolution que celle initialement choisie et ce afin de déterminer une solution qui rende la fonction f croissante.

Dans une autre variante de réalisation de l'invention, et/ou dans le cas où la première variante n'a pas permis de converger vers une solution, on introduit un utilisateur virtuel U'a dégradé. Dans l'exemple de la figure 9bis, l'utilisateur virtuel est déterminé à partir des deux utilisateurs U0 et U1 qui présentent une décroissance de la fonction f. L'utilisateur virtuel est déterminé de façon à permettre de tenir les deux contraintes et est sélectionné comme représentant en remplacement des deux utilisateurs U0 et U1. Le débit total de l'utilisateur virtuel est égal au débit total minimum, soit celui de U1 dans l'exemple. Le rendement de protection de l'utilisateur virtuel est égal au rendement de protection minimum, soit celui de U0 dans l'exemple. On a donc $Db_{total}(U'a) = Db_{total}(U1)$ et $Db_{utile}(U'a) = Db_{total}(U1)$. $Db_{utile}(U_0)/Db_{total}(U_0)$.

Dans une autre variante de réalisation, parmi les utilisateurs consécutifs qui ne vérifient pas la croissance de la fonction f, l'utilisateur qui présente le débit total le plus élevé est éliminé du groupe et n'est pas pris en compte dans l'étape de classification.

Si la fonction f entre deux utilisateurs d'un même groupe homogène présente une pente supérieure à 1, la détermination du couple (débit utile, taux de protection) adapté à ces deux utilisateurs peut également amener à l'introduction d'un utilisateur virtuel dont le débit total est égal au débit total minimum et le rendement de protection est égal au rendement de protection minimum des deux utilisateurs.

Néanmoins ce cas est peu probable en regard des performances classiques des réseaux sans fils, qui présentent en général une adaptation en débit liée à la qualité du service qu'ils peuvent offrir. Ce cas particulier rare pourra donc directement traité par la détermination d'un compromis entre les utilisateurs du groupe homogène, sans devoir également essayer de changer la résolution d'un des utilisateurs ou de supprimer de la classification l'utilisateur de débit total le plus élevé.

*Détermination des paramètres de compression/protection*

Une fois que l'étape de classification 903 a permis de spécifier une répartition des couches de résolution sur chacun des liens de communication avec des contraintes de débit et de qualité a priori atteignables, une étape 908 de détermination des paramètres de compression et de protection est alors exécutée.

La détermination des meilleurs paramètres de compression et de protection correspond, dans l'exemple décrit, au pas de quantification pour chaque couche de résolution du flux à compresser et du meilleur rendement de code correcteur à appliquer. Cette allocation est effectuée à partir des abaques générés au préalable. Le pas de quantification de chaque couche de résolution est déterminé par rapport au débit le plus faible disponible parmi ceux des liens de transmission composant le groupe de liens auquel a été attribué ladite couche de résolution à l'issu de l'étape de classification 903. Les couches de résolution sont traitées dans l'ordre croissant des résolutions en démarrant par la couche de plus basse résolution, puis des couches de résolution plus élevées. En effet, une fois que le pas de quantification optimal est déterminé pour la couche de base, cela permet d'isoler un seul abaque de référence pour la couche suivante et ainsi de suite en ne conservant à chaque fois que les points des abaques vérifiant les paramètres de compression choisis pour les couches inférieures.

Une fois les pas de quantification déterminés, le rendement de protection à utiliser, pour une couche de résolution donnée, est choisi en prenant le rendement de protection le plus faible parmi ceux affectés aux utilisateurs du groupe homogène correspondant à cette couche de résolution.

A l'issu de l'étape 908, les paramètres de compression et de protection minimums sont définis pour chacune des couches de résolution disponibles.

*Vérification*

Dans une étape de vérification 909 ou de contrôle, les choix de paramètres de compression effectués précédemment sont validés afin de préparer la phase de codage finale. La métrique de qualité perçue est évaluée pour chaque couche de résolution compressée avec les pas de quantification choisis. On vérifie notamment que les estimées de qualité présentent des valeurs effectivement comprises entre $D_{min}$ et $D_{max}$ et que l'écart de qualité entre deux couches de résolution est suffisant pour justifier l'ajout d'une couche de résolution supplémentaire. Si l'un de ces trois critères n'est pas vérifié, on effectue un rebouclage vers l'étape 903 afin d'éventuellement déterminer une autre configuration de choix et de répartition des couches de résolution.

*Protection supplémentaire*

Lorsque dans un groupe, plusieurs liens de transmission sont caractérisés par des couples (débit, probabilité d'erreur) différents, l'allocation des paramètres de compression et de protection est réalisée en prenant en compte le lien de transmission dont le débit disponible est le plus faible. Si d'autres liens présentent un débit plus élevé mais une probabilité d'erreur plus faible, la répartition du débit alloué à la compression et à la protection ne sera pas la même bien que la qualité perçue mesurée soit proche. Dans ce cas, un ajout éventuel de protection supplémentaire 910 est réalisé afin de garantir pour chaque lien de transmission que la qualité perçue sera bien supérieure au seuil minimum requis $D_{min}$. Cet ajout peut être fait par le biais d'un mécanisme de codage correcteur autorisant la redondance incrémentale, comme par exemple les codes RCPC (Rate Compatible Punctured Codes) ou RCPT (Rate Compatible Punctured Turbo Codes)

*Compression*

Une fois les paramètres de compression et protection déterminés pour chaque couche de résolution et chaque lien de transmission, l'opération de compression en tant que telle est réalisée (étape 911).

Au besoin, si les contraintes de débit ne sont pas vérifiées, le débit peut être adapté plus finement par exemple en supprimant certaines trames de façon à rester dans les contraintes de débit.

**Exemples de réalisation**

Les figures 10a,10b et 10c représentent un exemple de jeu d'abaques, du même type que ceux de la figure 8, et leur utilisation pour l'estimation de la qualité perçue et l'allocation du pas de quantification de chaque couche de résolution.

Le jeu d'abaques de la figure 10a représente la qualité perçue estimée pour chaque couche de résolution du flux compressé. Les points de mesures composant les abaques sont obtenus en appliquant une estimation de qualité telle que celle décrite à l'appui de la figure 2 sur la séquence vidéo décodée à chacune des résolutions disponibles puis éventuellement filtrée à la résolution la plus élevée. Dans l'exemple de la figure 10a, trois résolutions sont considérées.

La résolution la plus basse est représentée par les points référencés « BL » ou « Base Layer », la résolution intermédiaire est représentée par les points référencés « BL_EL1 » et la résolution la plus élevée est représentée par les points référencés « BL_EL1_EL2 ». Ainsi, pour obtenir les mesures nécessaires, la séquence vidéo décodée aux résolutions basse et intermédiaire est filtrée spatialement et/ou temporellement afin d'obtenir une séquence à la résolution la plus élevée pour ensuite lui appliquer le calcul d'estimation de la qualité perçue.

En application du procédé selon l'invention décrit à l'appui de la figure 9, le pas de quantification est tout d'abord déterminé pour la couche de base en considérant l'abaque 1001 représentant la qualité perçue pour la résolution la plus basse en fonction du pas de quantification. Ensuite, la première couche de raffinement est considérée et un unique abaque 1002 est isolé en correspondance avec le choix du pas de quantification déterminé pour la couche précédente. A nouveau le meilleur pas de quantification pour la couche de raffinement est déterminé. De façon similaire, un unique abaque 1003 est ensuite isolé pour la dernière couche de résolution et le pas de quantification correspondant est également identifié.

**Application**

La figure 11 décrit un exemple d'application du procédé selon l'invention. Un serveur vidéo 1101 comporte notamment un codeur vidéo adapté à générer un flux compressé avec de la granularité temporelle et/ou spatiale, un code correcteur d'erreur permettant de protéger un flux binaire par ajout de redondance et un contrôleur dont la fonction est de déterminer les paramètres de compression et de protection du flux codé et qui, à cet effet, exécute les étapes du procédé selon l'invention. Le contrôleur est exécuté par un processeur couplé à des moyens de stockage d'un ou plusieurs abaques de séquences vidéo nécessaires à la mise en oeuvre du procédé selon l'invention.

Le flux vidéo compressé 1102 est ainsi généré, il comporte plusieurs sous ensembles représentant respectivement la couche de base $C_1$. une couche de résolution supplémentaire $C_2$ et une troisième couche $C_3$ permettant d'atteindre la résolution la plus élevée. Le flux compressé comporte également des sections de redondance générées par ledit codeur canal. Ces différentes portions peuvent être soit contigües soit entrelacées, et éventuellement se verront adjoindre des en-têtes nécessaires à les identifier et à permettre leur mise en paquet pour transmission sur le réseau de transmission.

Considérons que le procédé selon l'invention a abouti à la répartition suivante des couches de résolution en fonction des liens de transmission 1104a,1105a,1106a et 1106c disponibles. La couche de base $C_1$ est allouée aux liens 110Ea,110Ec derrière lesquels sont situés deux utilisateurs 1109,1110. La couche de base $C_2$ est allouée au lien 1105a derrière lequel se trouve un unique utilisateur 1108. Enfin la couche $C_3$ représentant la résolution la plus élevée est allouée au lien 1104a qui présente les meilleures caractéristiques de débit disponible et de probabilité d'erreur et derrière lequel se situe un unique utilisateur 1107.

La protection allouée à la première classe $C_1$ est générée en deux temps, du fait des deux utilisateurs 1109,1110 qui présentent des caractéristiques (débit, probabilité d'erreur) différentes. Ainsi la section de redondance $P_{1,1}$ est générée en fonction des besoins de l'utilisateur 1109 et la section de redondance $P_{1,2}$ est ajoutée pour pallier les performances moins bonnes du canal de transmission qui permet de joindre l'utilisateur 1110. Les couches supplémentaires $C_2$ et $C_3$ présentent quant à elles une unique section de redondance $P_2$, $P_3$ chacune qui suffit à garantir une qualité perçue minimum aux utilisateurs 1107 et 1108.

Le flux 1102 est ainsi transmis à travers un réseau hétérogène 1103 puis vers trois stations de base 1104b,1105b,1106b qui comportent chacune un dispositif de transcodage permettant d'adapter le débit du flux compressé 1102 reçu aux contraintes des liens de transmission 1104a,1105a,1106a,1106c. Du fait de l'encapsulation hiérarchique de plusieurs sous ensembles, les sections correspondant aux couches de résolutions supérieures $C_2,C_3$ ainsi que les sections de redondance $P_2,P_3$ peuvent être supprimées par l'opération de transcodage. L'invention s'applique avantageusement dans le cas de liens de transmission sans fils qui présentent à la fois un débit variable et limité et des conditions de propagation entrainant une probabilité d'erreur non négligeable sur les données reçues. Cependant l'invention reste compatible de liens de transmission filaires pour lesquels la probabilité d'erreur est négligeable et le débit disponible est, dans la plupart des cas, beaucoup plus élevé.

**Références**

[1] C. Bergeron and C. Lamy-Bergot, "Modelling H.264/AVC sensitivity for error protection in wireless transmissions", Proceedings of the International Workshop on Multimedia Processing (MMSP'06), pp.302--305, Victoria, Canada, Oct 2006.
[2] C. Bergeron and C. Lamy-Bergot, "Compliant selective encryption for H.264/AVC video streams", Proc. Int. Workshop on Multimedia Processing (MMSP'05), pp. 477-480, Shanghai, China, Oct-Nov 2005.
[3] J. Hagenauer, "Rate-compatible punctured convolutional codes (RCPC codes) and their application," in IEEE Trans. on Comm., vol. 36, n. 4, pp. 339-400, April 1988.

**Revendications**

1. Procédé de détermination des paramètres de codage d'un flux vidéo à résolution variable par un codeur vidéo, ledit flux vidéo étant composé d'une pluralité (C) de couches de résolution et étant compressé pour être transmis à une pluralité de débits utiles donnés ou une pluralité de qualités données à travers un réseau hétérogène vers une pluralité (K) d'utilisateurs (Ui), **caractérisé en ce qu'**il comporte au moins les étapes suivantes :

   • générer (901) des abaques de référence permettant de déterminer des paramètres de compression, au moins le pas de quantification (QP), et/ou des paramètres de protection, au moins le rendement de protection, en fonction du débit utile d'une part et de la qualité perçue d'autre part, pour chaque couche de résolution
   • initialiser (902) les paramètres représentatifs dudit codeur vidéo, au moins le nombre maximum $C_{max}$ de couches de résolution, la qualité minimale $D_{min}$ acceptable et la qualité maximale $D_{max}$ atteignable pour chacune desdites résolutions,
   • déterminer (903.1), pour chaque utilisateur (Ui) associé à un lien de transmission présentant un débit disponible $d_i$ et une probabilité d'erreur $Pe_i$, et pour chaque résolution $C_j$ disponible, le couple {débit utile, rendement de protection} qui offre la meilleure qualité perçue à partir desdites abaques de référence,
   • retenir (903.2) pour chaque utilisateur (Ui) la résolution $C_{best}$ qui offre la meilleure qualité perçue et représenter ledit utilisateur (Ui) dans le plan d'abscisse égal au débit utile et d'ordonnée égale au débit total qui est égal au débit utile divisé par le rendement de protection, le calcul du débit total prenant en compte les autres données qui sont contenues en sus des données utiles dans le flux compressé à transmettre,
   • exclure de ladite représentation les utilisateurs $U_i$ qui présentent une valeur de qualité perçue inférieure au seuil minimum $D_{min}$, acceptable,
   • évaluer (903.3) la fonction f qui relie le débit utile au débit total à partir de la représentation desdits utilisateurs (Ui),
   • si la fonction f est strictement croissante pour tous les utilisateurs (Ui) considérés alors classer les utilisateurs en groupes homogènes en fonction de la qualité perçue puis associer la même résolution aux utilisateurs d'un même groupe,
   • si la fonction f n'est pas strictement croissante pour au moins deux points consécutifs associés à deux utilisateurs (U0,U1) exécuter l'une quelconque des étapes suivantes :

      i. modifier le choix de la résolution retenue à l'étape 903.2 pour au moins un desdits utilisateurs (U0,U1),
      ii. remplacer lesdits utilisateurs (U0,U1) par un utilisateur virtuel (U'a) dont le débit total est égal au débit total le plus faible desdits utilisateurs (U0,U1) et dont le rendement de protection est égal au rendement de protection minimum desdits utilisateurs (U0,U1),
      iii. éliminer de la classification l'utilisateur qui présente le débit total le plus élevé,

   • déterminer, pour chaque couche de résolution d'indice i et par ordre croissant du niveau de résolution, les paramètres de compression, au moins le pas de quantification (QP) à partir des abaques de référence,, et les paramètres de protection, au moins le rendement (R) du code correcteur, le pas de quantification (QP) étant déterminé pour le lien de transmission présentant le débit le plus faible disponible parmi les liens de transmission du groupe d'utilisateurs auquel est affecté ladite couche de résolution d'indice i, le rendement (R) du code correcteur étant déterminé comme étant le rendement le plus faible parmi ceux alloués aux utilisateurs dudit groupe,
   • compresser ledit flux vidéo en appliquant lesdits paramètres de compression déterminés,
   • protéger ledit flux vidéo en lui appliquant lesdits paramètres de protection.

**2.** Procédé selon la revendication 1 **caractérisé en ce que** ledit flux vidéo compressé est composé au moins de trames I et de trames P et que la qualité perçue est déterminée à partir de la relation suivante :

$$\hat{D}_{gop} = \prod_{i=0}^{N} \prod_{k=1}^{C} (1-P_e)^{\beta_{i,k} \cdot n_{i,k}} . D_0 +$$

$$\sum_{i=0}^{N} \sum_{k=1}^{C} \left[ \prod_{j=0}^{N} \prod_{l=1}^{k-1} (1-P_e)^{\beta_{i,l} \cdot n_{i,l}} \prod_{j=0}^{i-1} (1-P_e)^{\beta_{j,k} \cdot n_{j,k}} (1-(1-P_e)^{\beta_{i,k} \cdot n_{i,k}}) D_{loss_{i,k}} \right],$$

où N est le nombre d'images dans un groupe d'images (GOP), C est le nombre de couches de résolution, $n_{i,k}$ est la taille de la $k^{ieme}$ couche de résolution de la $i^{ème}$ trame P, $D_{loss\ i,k}$ est la distorsion observée lorsque la $k^{ieme}$ couche de résolution de la $i^{ème}$ trame P est perdue alors que les trames précédentes sont correctes, $D_0$ est la distorsion moyenne d'un groupe d'images sans erreur, $\beta_{i,k}$ est un paramètre prédéfini, $P_e$ est la probabilité d'erreur sur le lien de transmission.

**3.** Procédé selon la revendication 2 **caractérisé en ce que** la distorsion $D_0$ est égale au rapport signal à bruit PSNR.

**4.** Procédé selon la revendication 2 **caractérisé en ce que** la distorsion $D_0$ est déterminée comme la différence entre ledit flux vidéo compressé à une résolution donnée et ledit flux vidéo non compressé à la résolution maximale parmi celles disponibles.

**5.** Procédé selon l'une des revendications précédentes **caractérisé en ce que** lesdits groupes homogènes sont déterminés de façon à ce qu'une différence de qualité minimum donnée existe entre chaque groupe.

**6.** Procédé selon l'une des revendications précédentes **caractérisé en ce qu'**il comprend en plus une étape de vérification (909) des choix de paramètres de compression qui consiste au moins à déterminer la métrique de qualité perçue du flux vidéo et vérifier que cette métrique est supérieure à $D_{min}$ et inférieure à $D_{max}$

**7.** Procédé selon l'une des revendications précédentes **caractérisé en ce qu'**il comprend en plus une étape d'ajout de protection supplémentaire (910) à l'aide d'un mécanisme de codage correcteur autorisant la redondance incrémentale.

**8.** Procédé selon l'une des revendications précédentes **caractérisé en ce que** ledit flux vidéo présente une résolution variable spatiale et/ou temporelle et/ou en qualité.

**9.** Système pour déterminer des paramètres de codage d'un flux vidéo à résolution variable **caractérisé en ce qu'**il comporte au moins un codeur vidéo et un dispositif de contrôle conjoint adapté à piloter ledit codeur vidéo en exécutant au moins les étapes du procédé selon l'une des revendications 1 à 8.

**Patentansprüche**

**1.** Verfahren zum Ermitteln von Codierungsparametern eines Videostroms mit variabler Auflösung mittels eines Videocoders, wobei der Videostrom aus einer Mehrzahl (C) von Auflösungsschichten zusammengesetzt und komprimiert ist, um mit einer Mehrzahl von gegebenen Nutzdatenraten oder mit einer Mehrzahl von Datenqualitäten durch ein heterogenes Netzwerk zu einer Mehrzahl (K) von Nutzern (Ui) übertragen zu werden, **dadurch gekennzeichnet, dass** es wenigstens die folgenden Schritte beinhaltet:

• Erzeugen (901) von Referenztabellen, die das Ermitteln von Kompressionsparametern, wenigstens dem Quantisierungsschritt (QP) und/oder von Schutzparametern, wenigstens dem Schutzniveau, in Abhängigkeit von der Nutzdatenrate einerseits und der wahrgenommenen Qualität andererseits für jede Auflösungsschicht zulassen;
• Initialisieren (902) der repräsentativen Parameter des Videocoders, wenigstens die maximale Anzahl $C_{max}$ von Auflösungsschichten, die akzeptable Mindestqualität $D_{min}$ und die erreichbare Höchstqualität $D_{max}$ für jede der Auflösungen;
• Ermitteln (903.1), für jeden Nutzer (Ui), der mit einer Übertragungsverbindung mit einer verfügbaren Rate $d_i$

und einer Fehlerwahrscheinlichkeit $Pe_i$ assoziiert ist, und für jede verfügbare Auflösung $C_j$, das Paar {Nutzdatenrate, Schutzniveau}, das die beste wahrgenommene Qualität auf der Basis der Referenztabellen bietet;

• Behalten (903.2), für jeden Nutzer (Ui), der Auflösung $C_{best}$, die die beste wahrgenommene Qualität bietet und den Nutzer (Ui) auf der Abszisse, gleich der Nutzdatenrate, und der Ordinate, gleich der Gesamtrate, die der Nutzdatenrate dividiert durch das Schutzniveau entspricht, repräsentiert, wobei die Berechnung der Gesamtrate die anderen Daten berücksichtigt, die zusätzlich zu den Nutzdatenraten in dem zu übertragenden komprimierten Strom enthalten sind;

• Ausschließen der Nutzer $U_i$, die einen wahrgenommenen Qualitätswert repräsentieren, der kleiner ist als die akzeptable Mindestschwelle $D_{min}$, aus der Repräsentation;

• Beurteilen (903.3) der Funktion f, die die Nutzdatenrate mit der Gesamtrate auf der Basis der Repräsentation der Nutzer (Ui) verbindet;

• Klassifizieren, wenn die Funktion f für alle betrachteten Nutzer (Ui) streng steigt, der Nutzer in homogene Gruppen in Abhängigkeit von der wahrgenommenen Qualität, dann Assoziieren derselben Auflösung mit den Nutzern derselben Gruppe;

• Ausführen, wenn die Funktion f nicht für wenigstens zwei aufeinander folgende, mit zwei Nutzern (U0, U1) assoziierte Punkte zunimmt, von einem der folgenden Schritte:

i. Modifizieren der Wahl der in Schritt 903.2 behaltenen Auflösung für wenigstens einen der Nutzer (U0, U1);
ii. Ersetzen der Nutzer (U0, U1) durch einen virtuellen Nutzer (U'a), dessen Gesamtrate gleich der schwächsten Gesamtrate der Nutzer (U0, U1) ist, und dessen Schutzniveau dem Mindestschutzniveau der Nutzer (U0, U1) entspricht;
iii. Eliminieren des Nutzers mit der höchsten Gesamtrate aus der Klassifizierung;

• Ermitteln, für jede Auflösungsschicht mit einem Index i und in aufsteigender Reihenfolge des Auflösungsniveaus, der Kompressionsparameter, wenigstens des Quantisierungsschrittes (QP), auf der Basis der Referenztabellen, und der Schutzparameter, wenigstens das Niveau (R) des Korrekturcode, wobei der Quantisierungsschritt (QP) für die Übertragungslink mit der schwächsten verfügbaren Rate aus den Übertragungslinks der Gruppe von Nutzern ermittelt wird, denen die Auflösungsschicht mit Index i zugeordnet ist, wobei das Niveau (R) des Korrekturcodes als das schwächste Niveau aus all denen ermittelt wird, die den Nutzern der Gruppe zugeordnet sind;

• Komprimieren des Videostroms unter Anwendung der ermittelten Kompressionsparameter;

• Schützen des Videostroms unter Anwendung der Schutzparameter darauf.

2. Verfahren nach Anspruch 1, **dadurch gekennzeichnet, dass** sich der komprimierte Videostrom aus wenigstens Rahmen I und Rahmen P zusammensetzt, und dadurch, dass die wahrgenommene Qualität auf der Basis der folgenden Beziehung ermittelt wird:

$$\hat{D}_{gop} = \prod_{i=0}^{N}\prod_{k=1}^{C}(1-P_e)^{\beta_{i,k}.n_{i,k}}D_0 +$$

$$\sum_{i=0}^{N}\sum_{k=1}^{C}[\prod_{j=0}^{N}\prod_{l=1}^{k-1}(1-P_e)^{\beta_{i,l}.n_{i,l}}\prod_{j=0}^{i-1}(1-P_e)^{\beta_{j,k}.n_{j,k}}(1-(1-P_e)^{\beta_{i,k}.n_{i,k}})D_{loss_{i,k}}] \ ,$$

wobei N die Anzahl von Bildern in einer Gruppe von Bildern (GOP) ist, C die Anzahl von Auflösungsschichten ist, $n_{i,k}$ die Größe der $K^{ten}$ Auflösungsschicht des $i^{ten}$ Rahmens P ist, $D_{loss_{i,k}}$ die Verzerrung ist, die beobachtet wird, wenn die $k^{te}$ Auflösungsschicht des $i^{ten}$ Rahmens P verloren geht, während die vorhergehenden Rahmen korrekt sind, $D_0$ die mittlere Verzerrung einer Gruppe von fehlerfreien Bildern ist, $\beta_{i,k}$ ein vordefinierter Parameter ist, $P_e$ die Fehlerwahrscheinlichkeit auf der Übertragungslink ist.

3. Verfahren nach Anspruch 2, **dadurch gekennzeichnet, dass** die Verzerrung $D_0$ gleich dem Signal-Rausch-Verhältnis PSNR ist.

4. Verfahren nach Anspruch 2, **dadurch gekennzeichnet, dass** die Verzerrung $D_0$ als die Differenz zwischen dem komprimierten Videostrom mit einer gegebenen Auflösung und dem nicht komprimierten Videostrom mit der maximalen Auflösung aus den verfügbaren ermittelt wird.

5. Verfahren nach einem der vorherigen Ansprüche, **dadurch gekennzeichnet, dass** die homogenen Gruppen so ermittelt werden, dass eine gegebene Mindestqualitätsdifferenz zwischen jeweiligen Gruppen besteht.

6. Verfahren nach einem der vorherigen Ansprüche, **dadurch gekennzeichnet, dass** es ferner einen Schritt (909) des Verifizierens von Wahlen von Kompressionsparametern beinhaltet, der wenigstens das Ermitteln der wahrgenommenen Qualitätsmetrik des Videostroms und das Verifizieren beinhaltet, dass diese Metrik größer als $D_{min}$ und kleiner als $D_{max}$ ist.

7. Verfahren nach einem der vorherigen Ansprüche, **dadurch gekennzeichnet, dass** es ferner einen Schritt (910) des Hinzufügens von zusätzlichem Schutz mit Hilfe eines Korrekturcodierungsmechanismus beinhaltet, der inkrementale Redundanz zulässt.

8. Verfahren nach einem der vorherigen Ansprüche, **dadurch gekennzeichnet, dass** der Videostrom eine räumliche und/oder zeitliche und/oder qualitätsvariable Auflösung hat.

9. System zum Ermitteln von Codierungsparametern eines Videostroms mit variabler Auflösung, **dadurch gekennzeichnet, dass** es wenigstens einen Videocoder und eine zugehörige Steuervorrichtung zum Steuern des Videocoders durch Ausführen wenigstens der Schritte des Verfahrens nach einem der Ansprüche 1 bis 8 umfasst.

## Claims

1. A method for determining coding parameters of a variable resolution video stream using a video coder, said video stream being made up of a plurality (C) of resolution layers and being compressed in order to be transmitted at a plurality of given payload rates or at a plurality of data qualities through a heterogenous network to a plurality (K) of users (Ui), **characterised in that** it comprises at least the following steps:

• generating (901) reference charts allowing compression parameters, at least the quantification pitch (QP), and/or protection parameters, at least the protection level, to be determined as a function of the payload rate, on the one hand, and of the perceived quality, on the other hand, for each resolution layer;
• initialising (902) the parameters that represent said video coder, at least the maximum number $C_{max}$ of resolution layers, the acceptable minimum quality $D_{min}$ and the achievable maximum quality $D_{max}$ for each of said resolutions;
• determining (903.1), for each user (Ui) associated with a transmission link having an available rate $d_i$ and an error probability $Pe_i$ and for each available resolution $C_j$, the pair {payload rate, protection level} that provides the best perceived quality on the basis of said reference charts;
• retaining (903.2), for each user (Ui), the resolution $C_{best}$ that provides the best perceived quality and representing said user (Ui) in the abscissa that equals the payload rate and in the ordinate that equals the total rate, which equals the payload rate divided by the protection level, with the computation of the total rate taking into account the other data contained in addition to the payload data in the compressed stream to be transmitted;
• excluding users Ui from said representation with a perceived quality value that is less than the acceptable minimum threshold $D_{min}$;
• assessing (903.3) the function f that connects the payload rate to the total rate on the basis of the representation of said users (Ui);
• classifying, if the function f is strictly increasing for all of the considered users (Ui), the users into homogenous groups according to the perceived quality, then associating the same resolution to the users of the same group;
• executing, if the function f is not strictly increasing for at least two consecutive points associated with two users (U0, U1), any one of the following steps:

i. modifying the selection of the resolution retained during step 903.2 for at least one of said users (U0, U1);
ii. replacing said users (U0, U1) with a virtual user (U'a), the total rate of which equals the weakest total rate of said users (U0, U1) and for which the protection level equals the minimum protection level of said users (U0, U1);
iii. eliminating from the classification the user with the highest total rate;

• determining, for each resolution layer with an index i and in increasing order of the resolution level, the compression parameters, at least the quantification pitch (QP), on the basis of said reference charts, and the protection parameters, at least the level (R) of the correction code, with the quantification pitch (QP) being determined for the transmission link having the weakest available rate from among the transmission links of the group of users to which said resolution layer with an index i is assigned, the level (R) of the correction code being determined as being the weakest level from among those allocated to the users of said group;
• compressing said video stream by applying said determined compression parameters;
• protecting said video stream by applying said protection parameters thereto.

2. The method according to claim 1, **characterised in that** said compressed video stream is made up of at least frames I and frames P and **in that** the perceived quality is determined on the basis of the following relation:

$$\overset{\wedge}{D}_{gop} = \prod_{i=0}^{N}\prod_{k=1}^{C}(1-P_e)^{\beta_{i,k}.n_{i,k}}.D_0 +$$

$$\sum_{i=0}^{N}\sum_{k=1}^{C}[\prod_{j=0}^{N}\prod_{l=1}^{k-1}(1-P_e)^{\beta_{i,l}.n_{i,l}}\prod_{j=0}^{i-1}(1-P_e)^{\beta_{j,k}.n_{j,k}}(1-(1-P_e)^{\beta_{i,k}.n_{i,k}})D_{loss_{i,k}}]\ ,$$

where N is the number of images in a group of images (GOP), C is the number of resolution layers, $n_{i,k}$ is the size of the $k^{th}$ resolution layer of the $i^{th}$ grid P, $D_{lossi,k}$ is the distortion observed when the $k^{th}$ resolution layer of the $i^{th}$ grid P is lost even though the preceding grids are correct, $D_0$ is the mean distortion of a group of error-free images, $\beta_{i,k}$ is a predefined parameter, $P_e$ is the error probability on the transmission link.

3. The method according to claim 2, **characterised in that** said distortion $D_0$ is equal to the signal-to-noise ratio PSNR.

4. The method according to claim 2, **characterised in that** said distortion $D_0$ is determined as being the difference between said compressed video stream at a given resolution and said non-compressed video stream at the maximum resolution from among those that are available.

5. The method according to any one of the preceding claims, **characterised in that** said homogenous groups are determined so that a given minimum difference in quality exists between each group.

6. The method according to any one of the preceding claims, **characterised in that** it further comprises a step (909) of verifying selections of compression parameters that at least involves determining the perceived quality metric of the video stream and verifying that this metric is greater than $D_{min}$ and is less than $D_{max}$.

7. The method according to any one of the preceding claims, **characterised in that** it further comprises a step (910) of adding additional protection using a correction coding mechanism authorising incremental redundancy.

8. The method according to any one of the preceding claims, **characterised in that** said video stream has a spatial and/or temporal and/or quality variable resolution.

9. A system for determining coding parameters of a variable resolution video stream, **characterised in that** it comprises at least one video coder and an associated control device adapted to control said video coder by executing at least the steps of the method according to any one of claims 1 to 8.

EP 2 510 701 B1

EL2= CIF 30Hz

EL1= CIF 15Hz

BL= QCIF 15Hz

FIG.1

FIG.2

FIG.3

FIG.4

Information nombreuse (mouvement, détails)
type de séquence

Débit

Peu d'information (mouvement, détails)
type de séquence

Paramètre de quantification (QP)

## FIG.5

Débit

Courbe n

Débit cible

Courbe i

Débit disponible$_k$

Débit disponible$_{k+1}$

Courbe i-1

Courbe 1

QP$_A$     QP$_B$          QP

## FIG.6

FIG.7a

FIG.7b

FIG.7c

FIG.7d

FIG.7e

FIG.7f

FIG.8

Séquence 1
Séquence 2
Séquence 3

FIG.9

FIG.9bis

FIG.10a

FIG.10b

FIG.10c

FIG.11

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2005175084 A1
- FR 2903253
- FR 0805513

**Littérature non-brevet citée dans la description**

- **C. BERGERON ; C. LAMY-BERGOT.** Modelling H.264/AVC sensitivity for error protection in wireless transmissions. *Proceedings of the International Workshop on Multimedia Processing,* Octobre 2006, 302-305
- **C. BERGERON ; C. LAMY-BERGOT.** Compliant selective encryption for H.264/AVC video streams. *Proc. Int. Workshop on Multimedia Processing,* Octobre 2005, 477-480
- **J. HAGENAUER.** Rate-compatible punctured convolutional codes (RCPC codes) and their application. *IEEE Trans. on Comm.,* Avril 1988, vol. 36 (4), 339-400